# EUROPEAN PATENT APPLICATION

(11) **EP 4 694 331 A1**
(43) Date of publication of application: **11.02.2026**
(21) Application number: 24784133.1
(22) Date of filing: 27.03.2024
(51) Int. Cl.: H04W 36/00

(54) **COMMUNICATION METHOD AND COMMUNICATION APPARATUS**

(30) Priority: 07.04.2023 CN 202310405619
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN); ZHONG, Yaping, Shenzhen, Guangdong 518129 (CN); ZHENG, Lili, Shenzhen, Guangdong 518129 (CN)
(74) Representative: Körber, Martin Hans
(86) International application number: PCT/CN2024/084056
(87) International publication number: WO 2024/208048

(57) **Abstract**

This application provides a communication method and a communication apparatus. The method includes: A first network device determines a first information set, where parameter information in the first information set is parameter information included in configuration information of each of a plurality of second cells, the configuration information is used by a terminal to switch, the first network device manages a first cell, and the second cell is a neighboring cell of the first cell; and the first network device sends a first message in the first cell, where the first message includes the first information set and a second information set of each second cell, and the second information set includes parameter information other than the first information set in the configuration information of the second cell. This can reduce signaling overheads and improve resource utilization.

## Description

This application claims priority to Chinese Patent Application No. 202310405619.X, filed with the China National Intellectual Property Administration on April 7, 2023, and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a conventional terrestrial communication network, when a terminal communicates with an access network device, and signal quality of a network device (namely, a source network device) communicating with the terminal that is in a current serving cell (namely, a source cell) deteriorates, the source network device negotiates with a target network device, and then sends configuration information of a target cell to the terminal, and the terminal may switch to the target cell based on the configuration information. The source network device usually sends the configuration information of the target cell to the terminal through terminal-specific signaling.

In the terrestrial communication network, terminal handover is mainly caused by movement of the terminal, while in a non-terrestrial network (non-terrestrial network, NTN), terminal handover is mainly caused by movement of an NTN device. In addition, due to a wide coverage range of the NTN device, movement of the NTN device causes large-scale terminal handover. In the conventional terrestrial network, terminal-specific signaling is used to send the configuration information of the target cell to the terminal, and a large amount of terminal-specific signaling causes signaling congestion in a cell.

### SUMMARY

Embodiments of this application provide a communication method and a communication apparatus, to reduce signaling overheads and improve resource utilization.

According to a first aspect, a communication method is provided. The method may be performed by a communication apparatus. The communication apparatus may be a network device or a module (for example, a chip) configured (or used) in the network device. The following uses an example in which the communication method is performed by a first network device for description.

The method includes: The first network device determines a first information set, where parameter information in the first information set is parameter information included in configuration information of each of a plurality of second cells, the configuration information is used by a terminal to switch, the first network device manages a first cell, and the second cell is a neighboring cell of the first cell; and the first network device sends a first message in the first cell, where the first message includes the first information set and a second information set of each second cell, and the second information set includes parameter information other than the first information set in the configuration information of the second cell.

According to the foregoing solution, the first network device broadcasts the first message, where the first message includes the configuration information of the plurality of second cells. Specifically, a manner in which the first message carries the configuration information of the plurality of second cells is that the first message includes a common information set (that is, the first information set) in the configuration information of the plurality of second cells, and a dedicated information set (that is, the second information set) in the configuration information of each of the plurality of second cells. In this way, the terminal can determine the configuration information of the second cell based on the common information set and the dedicated information set of the second cell that are in the first message. In comparison with a manner in which the first network device separately sends the configuration information of the plurality of neighboring cells in the first cell, this manner can reduce unnecessary resource overheads caused by repeated transmission of the common information set in the configuration information of the plurality of neighboring cells, and improve resource utilization.

With reference to the first aspect, in some implementations of the first aspect, the first message further includes a first identifier, the first identifier identifies a first area, and the first area includes the plurality of second cells.

With reference to the first aspect, in some implementations of the first aspect, the method further includes: The first network device sends a second message in the first cell, where the second message includes the first identifier, and the second message indicates that configuration information of a cell in the first area is updated.

According to the foregoing solution, when the configuration information of the cell in the first area is updated, the first network device may notify, by using the second message, that the configuration information of the cell in the first area is updated, so that the terminal in the first area can determine, based on the second message, that the configuration information of the cell in the first area is updated. In this way, the updated configuration information of the cell is received. In addition, a terminal outside the first area may determine, based on the second message, that configuration information of a cell in an area in which the terminal is located is not updated. Therefore, the updated configuration information of the cell does not need to be received, so that the terminal can be prevented from receiving unnecessary information, thereby reducing unnecessary power consumption.

In an implementation, the first network device sends the updated first message.

According to an implementation, the first network device may send the updated first message, so that types of messages detected by the terminal can be reduced.

In another implementation, the method further includes: The first network device sends a third message, where the third message includes updated parameter information in the configuration information of the cell in the first area.

According to this implementation, the first network device may send only the updated parameter information, so that signaling overheads can be reduced, and resource utilization can be improved. With reference to the first aspect, in some implementations of the first aspect, that the first network device determines the first information set includes: The first network device receives the configuration information of the plurality of second cells from at least one second network device; and the first network device determines the first information set based on the configuration information of the plurality of second cells.

According to the foregoing solution, the first network device may extract common parameter information from the configuration information of the plurality of second cells, to avoid repeated sending of the common information set, reduce signaling overheads, and improve resource utilization.

For example, the at least one second network device includes an operation, administration and maintenance device, or the at least one second network device includes an access network device that manages the plurality of second cells.

With reference to the first aspect, in some implementations of the first aspect, that the first network device receives the configuration information of the plurality of second cells from at least one second network device includes: The first network device receives configuration information of the at least one second cell from the second network device in a process of establishing a communication interface with the second network device.

With reference to the first aspect, in some implementations of the first aspect, the method further includes: The first network device receives the first information set from a second network device, where the second network device manages the plurality of second cells; and the first network device receives the second information set of each second cell from the second network device.

According to the foregoing solution, the first network device may obtain, from the second network device that manages the plurality of second cells, the common information set in the extracted configuration information of the plurality of second cells and the dedicated information set of each second cell, to avoid repeated sending of the common information set, reduce signaling overheads, and improve resource utilization.

According to a second aspect, a communication method is provided. The method may be performed by a communication apparatus. The communication apparatus may be a terminal or a module (for example, a chip) configured (or used) in the terminal. The following uses an example in which the communication method is performed by the terminal for description.

The method includes: The terminal receives a first message from a first network device, where the first message includes a first information set, parameter information in the first information set is parameter information included in configuration information of each of a plurality of second cells, the configuration information is used by a terminal to switch, the first message further includes a second information set of each second cell, the second information set includes parameter information other than the first information set in the configuration information of the second cell, the second cell is a neighboring cell of the first cell, and the first cell is a serving cell of the terminal; and the terminal determines the configuration information of the second cell based on the first information set and the second information set of the second cell.

For beneficial effect of a solution that is the same as or corresponding to the first aspect in the second aspect, refer to the descriptions in the first aspect. Details are not described herein again.

With reference to the second aspect, in some implementations of the second aspect, the first message further includes a first identifier, the first identifier identifies a first area, the first area includes the plurality of second cells, and the terminal is located in the first area.

With reference to the second aspect, in some implementations of the second aspect, the method further includes: The terminal receives a second message from the first network device, where the second message indicates that configuration information of a cell in the first area is updated.

With reference to the second aspect, in some implementations of the second aspect, that the terminal receives the first message from the first network device includes: When the second message includes the first identifier, the terminal receives the first message from the first network device.

With reference to the second aspect, in some implementations of the second aspect, the method further includes: The terminal receives a third message from the first network device, where the third message includes updated parameter information in the configuration information of the cell in the first area.

With reference to the second aspect, in some implementations of the second aspect, that the terminal receives the first message from the first network device includes: When remaining service duration of the first cell is less than or equal to a threshold, the terminal receives the first message from the first network device.

According to the foregoing solution, there is a high probability that the terminal performs handover when the service duration of the terminal in the first cell is less than or equal to a threshold. Therefore, the terminal may receive the first message, so that the terminal can obtain configuration information used for handover to a neighboring cell, and switch to the neighboring cell in time based on the configuration information of the neighboring cell when handover is required. However, a probability that the terminal performs handover when the service duration of the terminal in the first cell is greater than the threshold is low. Therefore, the terminal may not receive the first message, so that unnecessary power consumption of the terminal can be reduced.

With reference to the second aspect, in some implementations of the second aspect, that the terminal receives the first message from the first network device includes: When the terminal is located at an edge location in the first cell, the terminal receives the first message from the first network device, where the edge location is indicated by the first network device.

According to the foregoing solution, when the terminal is located at the edge location of the first cell, there is a high probability that the terminal leaves the coverage range of the first cell. Correspondingly, there is a high probability that the terminal performs handover. Therefore, the terminal may receive the first message, so that the terminal can obtain configuration information used for handover to a neighboring cell, and switch to the neighboring cell in time based on the configuration information of the neighboring cell when handover is required. However, a probability that the terminal performs handover at a non-edge location of the first cell is low. Therefore, the terminal may not receive the first message, so that unnecessary power consumption of the terminal can be reduced.

According to a third aspect, a communication method is provided. The method may be performed by a communication apparatus. The communication apparatus may be a network device or a module (for example, a chip) configured (or used) in the network device. The following uses an example in which the communication method is performed by a first network device for description.

The method includes: The first network device obtains configuration information of a second cell, where the first network device manages a first cell, and the second cell is a neighboring cell of the first cell. The first network device sends a first message in the first cell. The first message includes a first information set and a second information set. The first information set includes configuration information of a reference cell. The second information set includes a parameter that is in configuration information of the second cell and whose parameter value is different from a parameter value of the configuration information of the reference cell. The first message is used by the terminal to switch.

According to the foregoing solution, the first network device may determine that the first message includes the configuration information of the reference cell and incremental configuration in the configuration information of the second cell compared with the configuration information of the reference cell. This can reduce repeated sending of same information, reduce signaling overheads, and improve resource utilization.

With reference to the third aspect, in some implementations of the third aspect, the reference cell is the first cell or the reference cell is a third cell, and the third cell is a neighboring cell other than the second cell in neighboring cells of the first cell.

With reference to the third aspect, in some implementations of the third aspect, the first message further includes a first identifier, the first identifier identifies a first area, and the first area includes the second cell.

With reference to the third aspect, in some implementations of the third aspect, the method further includes: The first network device sends a second message in the first cell, where the second message includes the first identifier, and the second message indicates that handover configuration of a cell in the first area is updated.

With reference to the third aspect, in some implementations of the third aspect, the method further includes: The first network device sends a third message, where the third message includes an updated parameter in the handover configuration of the cell in the first area.

With reference to the third aspect, in some implementations of the third aspect, that the first network device obtains handover configuration of the second cell includes: The first network device receives handover configuration of the second cell from a second network device in a process of establishing a communication interface with the second network device.

According to a fourth aspect, a communication method is provided. The method may be performed by a communication apparatus. The communication apparatus may be a terminal or a module (for example, a chip) configured (or used) in the terminal. The following uses an example in which the communication method is performed by the terminal for description.

The method includes: The terminal sends a first message in a first cell, where the first message includes a first information set and a second information set, the first information set includes handover configuration of a reference cell, and the second information set includes a parameter that is in handover configuration of a second cell and whose parameter value is different from a parameter value of handover configuration of the reference cell. The terminal determines handover configuration of the second cell based on the first message.

With reference to the fourth aspect, in some implementations of the fourth aspect, the handover configuration information of the second cell includes the second information set and a third information set, and the third information set is a parameter in the first information set other than a parameter included in the second information set.

With reference to the fourth aspect, in some implementations of the fourth aspect, the first message further includes a first identifier, the first identifier identifies a first area, the first area includes the second cell, and the terminal is located in the first area.

With reference to the fourth aspect, in some implementations of the fourth aspect, the method further includes: The terminal receives a second message from the first network device, where the second message indicates that handover configuration of a cell in the first area is updated.

With reference to the fourth aspect, in some implementations of the fourth aspect, that the terminal receives the first message from the first network device includes: When the second message includes the first identifier, the terminal receives the first message from the first network device.

With reference to the fourth aspect, in some implementations of the fourth aspect, the method further includes: The terminal receives a third message from the first network device, where the third message includes an updated parameter in the handover configuration of the cell in the first area.

With reference to the fourth aspect, in some implementations of the fourth aspect, that the terminal receives the first message from the first network device includes: When remaining service duration of the first cell is less than or equal to a threshold, the terminal receives the first message from the first network device.

With reference to the fourth aspect, in some implementations of the fourth aspect, that the terminal receives the first message from the first network device includes: When the terminal is located at an edge location in the first cell, the terminal receives the first message from the first network device, where the edge location is indicated by the first network device.

According to a fifth aspect, a communication apparatus is provided. In a design, the apparatus may include modules for performing the method/operations/steps/actions described in the first aspect. The modules may be hardware circuits, may be software, or may be implemented by using a combination of a hardware circuit and software. In a design, the apparatus includes: a processing unit, configured to determine a first information set, where parameter information in the first information set is parameter information included in configuration information of each of a plurality of second cells, the configuration information is used by a terminal to switch, a first network device manages a first cell, and the second cell is a neighboring cell of the first cell; and a transceiver unit, configured to send a first message in the first cell, where the first message includes the first information set and a second information set of each second cell, and the second information set includes parameter information other than the first information set in the configuration information of the second cell.

With reference to the fifth aspect, in some implementations of the fifth aspect, the first message further includes a first identifier, the first identifier identifies a first area, and the first area includes the plurality of second cells.

With reference to the fifth aspect, in some implementations of the fifth aspect, the transceiver unit is further configured to send a second message in the first cell, where the second message includes the first identifier, and the second message indicates that configuration information of a cell in the first area is updated.

With reference to the fifth aspect, in some implementations of the fifth aspect, the transceiver unit is further configured to send a third message, where the third message includes updated parameter information in the configuration information of the cell in the first area.

With reference to the fifth aspect, in some implementations of the fifth aspect, the transceiver unit is further configured to receive the configuration information of the plurality of second cells from at least one second network device; and the processing unit is specifically configured to determine the first information set based on the configuration information of the plurality of second cells.

With reference to the fifth aspect, in some implementations of the fifth aspect, the transceiver unit is specifically configured to receive configuration information of the at least one second cell from the second network device in a process of establishing a communication interface with the second network device.

With reference to the fifth aspect, in some implementations of the fifth aspect, the transceiver unit is further configured to: receive the first information set from a second network device, where the second network device manages the plurality of second cells; and receive the second information set of each second cell from the second network device.

According to a sixth aspect, a communication apparatus is provided. In a design, the apparatus may include modules for performing the method/operations/steps/actions described in the second aspect. The modules may be hardware circuits, may be software, or may be implemented by using a combination of a hardware circuit and software. In a design, the apparatus includes: a transceiver unit, configured to receive a first message from a first network device, where the first message includes a first information set, parameter information in the first information set is parameter information included in configuration information of each of a plurality of second cells, the configuration information is used by a terminal to switch, the first message further includes a second information set of each second cell, the second information set includes parameter information other than the first information set in the configuration information of the second cell, the second cell is a neighboring cell of the first cell, and the first cell is a serving cell of the terminal; and a processing unit, configured to determine the configuration information of the second cell based on the first information set and the second information set of the second cell.

With reference to the sixth aspect, in some implementations of the sixth aspect, the first message further includes a first identifier, the first identifier identifies a first area, the first area includes the plurality of second cells, and the terminal is located in the first area.

With reference to the sixth aspect, in some implementations of the sixth aspect, the transceiver unit is further configured to receive a second message from the first network device, where the second message indicates that configuration information of a cell in the first area is updated.

With reference to the sixth aspect, in some implementations of the sixth aspect, the transceiver unit is specifically configured to: when the second message includes the first identifier, receive the first message from the first network device.

With reference to the sixth aspect, in some implementations of the sixth aspect, the transceiver unit is further configured to receive a third message from the first network device, where the third message includes updated parameter information in the configuration information of the cell in the first area.

With reference to the sixth aspect, in some implementations of the sixth aspect, the transceiver unit is specifically configured to:
when remaining service duration of the first cell is less than or equal to a threshold, receive the first message from the first network device; or
when the terminal is located at an edge location in the first cell, receive the first message from the first network device, where the edge location is indicated by the first network device.

According to a seventh aspect, a communication apparatus is provided. In a design, the apparatus may include modules for performing the method/operations/steps/actions described in the third aspect. The modules may be hardware circuits, may be software, or may be implemented by using a combination of a hardware circuit and software. In a design, the apparatus includes: a transceiver unit, configured to obtain configuration information of a second cell, where a first network device manages a first cell, and the second cell is a neighboring cell of the first cell; and a processing unit, configured to determine a first message, where the first message includes a first information set and a second information set, the first information set includes configuration information of a reference cell, and the second information set includes a parameter that is in configuration information of the second cell and whose parameter value is different from a parameter value of the configuration information of the reference cell. The first message is used by a terminal to switch. The transceiver unit is further configured to send the first message in the first cell.

With reference to the seventh aspect, in some implementations of the seventh aspect, the reference cell is the first cell or the reference cell is a third cell, and the third cell is a neighboring cell other than the second cell in neighboring cells of the first cell.

With reference to the seventh aspect, in some implementations of the seventh aspect, the first message further includes a first identifier, the first identifier identifies a first area, and the first area includes the second cell.

With reference to the seventh aspect, in some implementations of the seventh aspect, the transceiver unit is further configured to send a second message in the first cell, where the second message includes the first identifier, and the second message indicates that handover configuration of a cell in the first area is updated.

With reference to the seventh aspect, in some implementations of the seventh aspect, the transceiver unit is further configured to send a third message, where the third message includes an updated parameter in the handover configuration of the cell in the first area.

With reference to the seventh aspect, in some implementations of the seventh aspect, the transceiver unit is further specifically configured to receive handover configuration of the second cell from the second network device in a process of establishing a communication interface with the second network device.

According to an eighth aspect, a communication apparatus is provided. In a design, the apparatus may include modules for performing the method/operations/steps/actions described in the fourth aspect. The modules may be hardware circuits, may be software, or may be implemented by using a combination of a hardware circuit and software. In a design, the apparatus includes: a transceiver unit, configured to send a first message in a first cell, where the first message includes a first information set and a second information set, the first information set includes handover configuration of a reference cell, and the second information set includes a parameter that is in handover configuration of a second cell and whose parameter value is different from a parameter value of the handover configuration of the reference cell; and a processing unit, configured to determine handover configuration of the second cell based on the first message.

With reference to the eighth aspect, in some implementations of the eighth aspect, the handover configuration information of the second cell includes the second information set and a third information set, and the third information set is a parameter in the first information set other than a parameter included in the second information set.

With reference to the eighth aspect, in some implementations of the eighth aspect, the first message further includes a first identifier, the first identifier identifies a first area, the first area includes the second cell, and the terminal is located in the first area.

With reference to the eighth aspect, in some implementations of the eighth aspect, the transceiver unit is further configured to receive a second message from the first network device, where the second message indicates that handover configuration of a cell in the first area is updated.

With reference to the eighth aspect, in some implementations of the eighth aspect, the transceiver unit is specifically configured to: when the second message includes the first identifier, receive, by the terminal, the first message from the first network device.

With reference to the eighth aspect, in some implementations of the eighth aspect, the transceiver unit is further configured to receive a third message from the first network device, where the third message includes an updated parameter in the handover configuration of the cell in the first area.

With reference to the eighth aspect, in some implementations of the eighth aspect, the transceiver unit is specifically configured to:
when remaining service duration of the first cell is less than or equal to a threshold, receive the first message from the first network device; or
when the terminal is located at an edge location in the first cell, receive the first message from the first network device, where the edge location is indicated by the first network device.

According to a ninth aspect, a communication apparatus is provided, including a processor. The processor may implement the method according to any one of the first aspect, the third aspect, and the possible implementations of the first aspect or the third aspect. Optionally, the communication apparatus further includes a memory. The processor is coupled to the memory, and may be configured to execute instructions in the memory, to implement the method according to any one of the first aspect, the third aspect, and the possible implementations of the first aspect or the third aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may be a transceiver circuit. Optionally, the input/output interface may be an input/output circuit.

According to a tenth aspect, a communication apparatus is provided, including a processor. The processor may implement the method according to any one of the second aspect, the fourth aspect, or the possible implementations of the second aspect or the fourth aspect. Optionally, the communication apparatus further includes a memory. The processor is coupled to the memory, and may be configured to execute instructions in the memory, to implement the method according to any one of the second aspect, the fourth aspect, or the possible implementations of the second aspect or the fourth aspect. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to an eleventh aspect, a processor is provided, including an input circuit, an output circuit, and a processing circuit. The processing circuit is configured to receive a signal through the input circuit, and transmit a signal through the output circuit, to enable the processor to perform the method according to any one of the first aspect to the fourth aspect or the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a computer program product is provided. The computer program product includes a computer program (which may alternatively be referred to as code or instructions). When the computer program is run on a computer, the computer is enabled to perform the method according to any one of the first aspect to the fourth aspect or the possible implementations of the first aspect to the fourth aspect.

According to a thirteenth aspect, a computer-readable storage medium is provided. The computer-readable storage medium stores a computer program (which may alternatively be referred to as code or instructions). When the computer program is run on a computer, the computer is enabled to perform the method according to any one of the first aspect to the fourth aspect or the possible implementations of the first aspect to the fourth aspect.

According to a fourteenth aspect, a communication system is provided, including at least one of the foregoing terminal devices and at least one of the foregoing network devices.

### BRIEF DESCRIPTION OF DRAWINGS

FIG. 1 is a diagram of an architecture of a communication system according to an embodiment of this application;
FIG. 2 is a diagram of an architecture of an NTN applicable to an embodiment of this application;
FIG. 2a is a diagram of another architecture of an NTN applicable to an embodiment of this application;
FIG. 3 is a diagram of an earth moving cell according to an embodiment of this application;
FIG. 4 is a diagram of an earth fixed cell according to an embodiment of this application;
FIG. 5 is a diagram of feeder link handover according to an embodiment of this application;
FIG. 6 is a schematic flowchart of a communication method according to an embodiment of this application;
FIG. 7 is another schematic flowchart of a communication method according to an embodiment of this application;
FIG. 8 is a schematic interaction flowchart of a communication method according to an embodiment of this application;
FIG. 9 is a block diagram of a communication apparatus according to an embodiment of this application; and
FIG. 10 is a diagram of a structure of a terminal device according to an embodiment of this application; and
FIG. 11 is a diagram of a structure of a network device according to an embodiment of this application.

### DESCRIPTION OF EMBODIMENTS

The following describes technical solutions of this application with reference to accompanying drawings.

In embodiments of this application, "/" may indicate an "or" relationship between associated objects. For example, A/B may indicate A or B. "and/or" may indicate that there are three relationships between associated objects. For example, A and/or B may indicate the following three cases: Only A exists, both A and B exist, and only B exists, where A and B may be singular or plural. For ease of describing the technical solutions in embodiments of this application, terms such as "first" and "second" may be used for differentiation in embodiments of this application. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

The technical solutions of this application may be applied to a non-terrestrial network and/or a terrestrial network (terrestrial network, TN). The technical solutions provided in this application may use various radio access technologies, for example, a 5th generation (5th-generation, 5G) wireless access technology such as a long term evolution (long term evolution, LTE) wireless access technology and a new radio (new radio, NR) technology, a 6th generation (6th-generation, 6G) wireless access technology, a new wireless access technology that emerges in the future, or the like.

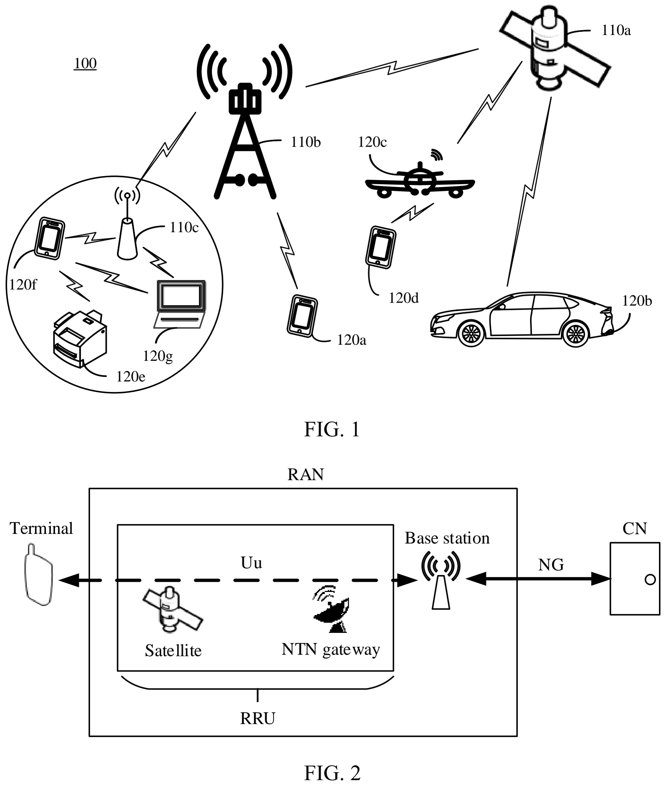

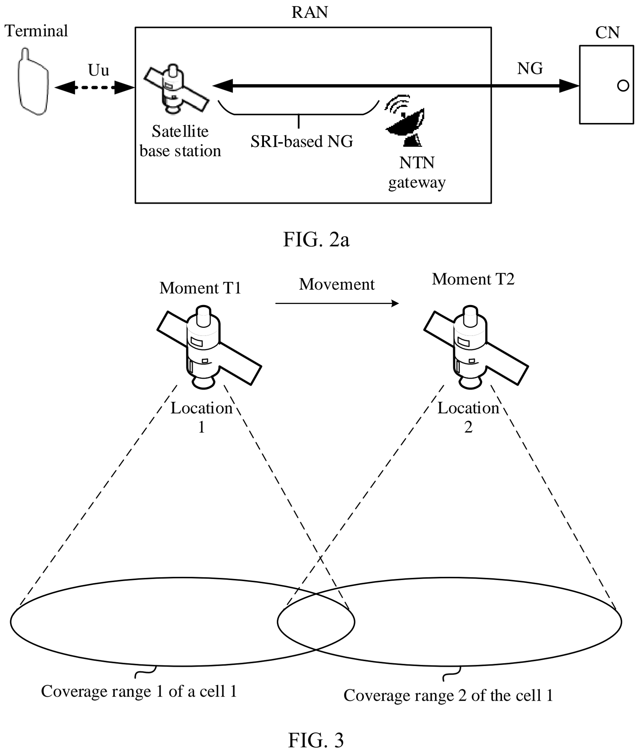

FIG. 1 is a diagram of an architecture of a communication system 100 applicable to an embodiment of this application. As shown in FIG. 1, the communication system 100 may include at least one network device (for example, 110a, 110b, and 110c in FIG. 1). For example, the at least one network device may include a terrestrial network device, for example, an access network device 110b and an access network device 110c. The at least one network device may further include a non-terrestrial network device, for example, the satellite 110a. The communication system 100 may further include at least one terminal (for example, 120a to 120j in FIG. 1). Access network devices may be connected to each other in a wired or wireless manner. FIG. 1 is merely a diagram. The communication system may further include another network device, for example, may further include a wireless relay device and a wireless backhaul device. In the communication system 100, the non-terrestrial network device may implement transparent payload (transparent payload) transmission (detailed descriptions are provided below with reference to FIG. 2) or regenerative payload (regenerative payload) transmission (detailed descriptions are provided below with reference to FIG. 2a). It should be understood that the non-terrestrial network device provided in this embodiment of this application includes but is not limited to a satellite, an unmanned aircraft system (unmanned aircraft system, UAS), a high altitude platform station (high altitude platform station, HAPS), and the like. In this application, an example in which the satellite is used as the non-terrestrial network device is used for description.

FIG. 2 is a diagram of an architecture of an NTN applicable to an embodiment of this application. As shown in FIG. 2, a terminal communicates with a terrestrial base station through a universal terrestrial radio access network-user (universal terrestrial radio access network-user, Uu) interface. A satellite may implement transparent payload transmission between the terminal and the terrestrial base station. The satellite and an NTN gateway may be considered as a remote radio unit (remote radio unit, RRU) of the terrestrial base station, to implement transparent signal forwarding. In other words, the satellite supports only functions such as radio frequency filtering, frequency conversion, and amplification, and a signal waveform remains unchanged. Satellite forwarding is transparent to the terminal. The terrestrial base station and a core network (core network, CN) may communicate with each other through a next generation (next generation, NG) interface. The terrestrial base station and the core network exchange, through the NG interface, non-access stratum (non-access stratum, NAS) signaling of the core network and service data of the terminal device.

FIG. 2a is a diagram of another architecture of an NTN applicable to an embodiment of this application. As shown in FIG. 2a, a satellite has some or all functions of an access network device, and may be referred to as a satellite base station. The satellite can provide a radio access service, and schedule a radio resource for a terminal that accesses a network through the satellite base station. The satellite base station communicates with the terminal through a Uu interface. The satellite base station and the CN may communicate with each other through an NG interface, and the satellite base station and a core network may exchange NAS signaling and service data of the terminal through the NG interface. A satellite radio interface (satellite radio interface, SRI) interface is a feeder link between an NTN gateway and the satellite. In FIG. 2a, the SRI interface may be used as a part of the NG interface to implement communication and interaction between the satellite and the core network.

The network device provided in embodiments of this application may be an access network device, including various base stations (base station), for example, a NodeB (NodeB), an evolved NodeB (evolved NodeB, eNodeB or eNB), a next generation NodeB (next generation NodeB, gNB), a next generation base station in a 6th generation (6th generation, 6G) mobile communication system, or a base station in a future mobile communication system; or may be a transmission reception point (transmission reception point, TRP), an access network device in an open radio access network (open radio access network, O-RAN or open RAN), an access node in a wireless fidelity (wireless fidelity, Wi-Fi) system, or the like. Alternatively, the network device may be a module or a unit that completes some functions of a base station, for example, may include one or more modules of a central unit (central unit, CU), a distributed unit (distributed unit, DU), a central unit control plane (CU control plane, CU-CP) module, and a central unit user plane (CU user plane, CU-UP) module. The network device may be a non-terrestrial network device (for example, 110a in FIG. 1 or the satellite base station in FIG. 2), or may be a macro base station (for example, 110b in FIG. 1). Alternatively, the access network device may be a micro base station or an indoor base station (for example, 110c in FIG. 1), or may be a relay node, a donor node, or the like. In addition, the access network device may alternatively be a logical unit or module, and a function of the access network device is implemented by software. A specific technology and a specific device form that are used by the access network device are not limited in this application.

It may be understood that, in different systems, the CU (including the CU-CP or the CU-UP) or the DU may alternatively have different names, but a person skilled in the art can understand meanings of the names. For example, in an O-RAN system, the CU may also be referred to as an O-CU (open CU), the DU may also be referred to as an O-DU, the CU-CP may also be referred to as an O-CU-CP, and the CU-UP may also be referred to as an O-CU-UP.

The terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communications, mMTC), device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an unmanned aerial vehicle, a helicopter, an airplane (for example, 120c in FIG. 1), a ship, a robot, a mechanical arm, a smart home device (for example, a printer 120e in FIG. 1), or the like. A specific technology and a specific device form used by the terminal device are not limited in this application.

The base station and/or the terminal device may be at fixed locations or may be movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. An environment/a scenario in which the base station and the terminal device are located is not limited in this application. The base station and the terminal device may be deployed in a same environment/scenario or different environments/scenarios. For example, both the base station and the terminal device are deployed on land; or the base station is deployed on land, and the terminal device is deployed on water.

The following first describes related technologies and terms in embodiments of this application.

In a conventional terrestrial network, when a terminal communicates with a terrestrial network device (for example, a terrestrial base station), and signal quality of a network device (namely, a source network device) communicating with the terminal that is in a current serving cell (namely, a source cell) deteriorates, the source network device negotiates with a target network device, and then the source network device sends a radio resource control (radio resource control, RRC) reconfiguration message to the terminal, where the RRC reconfiguration message includes configuration information of a target cell; and the terminal may switch to the target cell based on the configuration information. For example, the configuration information may include but is not limited to an identifier, frequency information, and resource configuration that are of the target cell. The terminal may establish, based on the configuration information of the target cell, a communication connection to the target network device that manages the target cell, and a serving cell of the terminal changes from the source cell to the target cell. The RRC reconfiguration message is terminal-specific configuration information sent by the source network device to the terminal.

Different from the terrestrial network, mobility of a satellite is a main cause of terminal handover. For example, scenarios include but are not limited to the following:

In a scenario, a satellite running in a non-geostationary orbit (non-geostationary orbit, NGSO) moves at a high speed relative to the ground, so that coverage duration of the satellite in an area on the ground is short. As a result, the terminal frequently changes a serving cell. When the NGSO satellite is used as an access device, cells of the satellite may be classified into an earth moving cell (earth moving cell) and an earth fixed cell (earth fixed cell).

The earth moving cell means that a coverage range of a cell of the satellite moves with movement of the satellite relative to the ground. FIG. 3 is a diagram of the earth moving cell. The satellite manages a cell 1, and the satellite is located at a location 1 at a moment T1. A coverage range on the ground of the cell 1 managed by the satellite is a coverage range 1. However, as the satellite moves, a relative location between the satellite and the ground changes, and the coverage range on the ground of the cell 1 also changes as the satellite moves. For example, if the satellite is located at a location 2 at a moment T2, the coverage range on the ground of the cell 1 is also changed to a coverage range 2. For the earth moving cell, as the cell moves, terminals continuously switch to/out of the cell.

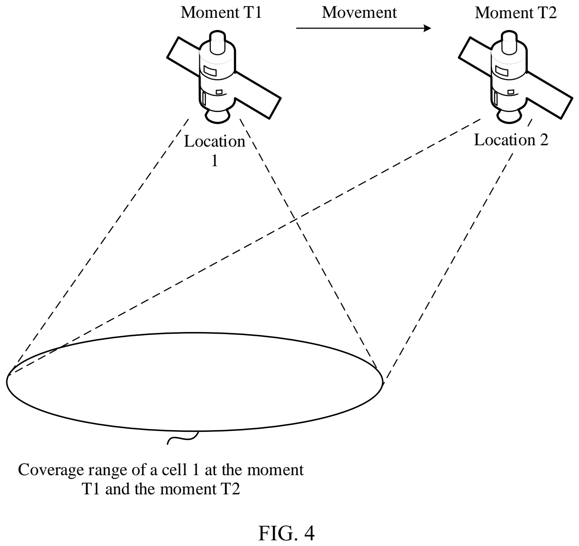

The earth fixed cell means that the cell is fixed relative to the ground within a specific time period. The satellite may point one or more beams to a fixed area within a specific time period by using a beamforming technology. The one or more beams are used to transmit a signal of one cell. The fixed area to which the one or more beams point is a coverage range of the cell. FIG. 4 is a diagram of the earth fixed cell. A satellite manages a cell 1. The satellite is located at a location 1 at a moment T1, and is located at a location 2 at a moment T2. The satellite adjusts directions of one or more beams used to transmit a signal of the cell 1. In this way, a coverage range of the cell 1 at the moment T1 is the same as that at the moment T2. For the earth fixed cell, when signal quality of the satellite in the area in which the coverage range of the cell 1 is located decreases to a specific value, all terminals in the area switch to another satellite with good signal quality in the area.

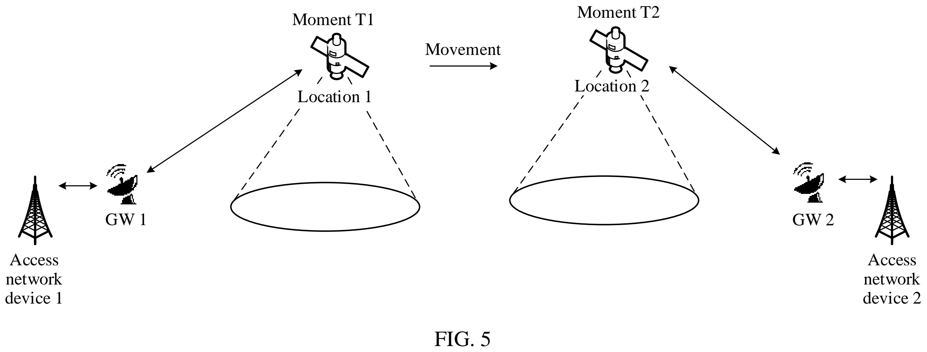

In another scenario, for example, when the network architecture shown in FIG. 2 is applied, the satellite is configured to implement transparent payload transmission between the terminal and the terrestrial base station. The satellite and an NTN gateway may be considered as RRUs of the terrestrial base station. As the satellite moves relative to the ground, a connection (a communication link of the connection is referred to as a feeder link (feeder link)) between the satellite and the NTN gateway (gate way, GW) also changes. This is referred to as feeder link switch over (feeder link switch over). As shown in FIG. 5, at the moment T1, the satellite is connected to a GW 1 at the location 1, and the GW 1 is connected to an access network device 1. In other words, at the moment T1, the satellite is an RRU of the access network device 1. A terminal within the coverage range of the satellite communicates with the access network device 1 within the coverage range of the access network device 1. Due to movement of the satellite, the feeder link switches to a GW 2 because quality of a link between the satellite and the GW 1 deteriorates. For example, at the moment T2, the satellite is connected to the GW 2 at the location 2, and the GW2 is connected to the access network device 2. In other words, at the moment T2, the satellite is an RRU of the access network device 2. A terminal within the coverage range of the satellite communicates with the access network device 2 within the coverage range of the access network device 2. Handover of the feeder link of the satellite causes all terminals in the coverage range of the satellite to simultaneously switch to another access network device.

As described above, movement of the satellite causes large-scale terminal handover. In a handover manner used in the conventional terrestrial network, that is, the source network device sends, to each terminal that needs to switch, configuration information used for handover of the terminal. This causes signaling congestion in a cell.

For the foregoing problem, in a solution, for a neighboring cell of a cell managed by the network device, a same part of information exists in configuration information that is configured for different terminals and that is used for handover to the neighboring cell. For example, the same part of information may be cell-common (cell-common) configuration information of the neighboring cell. Therefore, the source network device may send the cell-common configuration information of the neighboring cell in a multicast or broadcast manner. Different parts of information in the configuration information that is configured for the different terminals and that is used for handover to the neighboring cell may be referred to as terminal-specific configuration information or UE-specific (UE-specific) configuration information. The source network device may separately send the terminal-specific configuration information and the UE-specific configuration information to the terminal. Therefore, the source network device can be prevented from repeatedly transmitting the cell-common configuration information of the neighboring cell, thereby improving resource utilization. Further, the cell managed by the network device may have a plurality of neighboring cells. Cell-common configuration information of the plurality of neighboring cells may also have a same part of information that may be referred to as area-common configuration information, that is, may include common configuration information of areas of the plurality of cells. The source network device broadcasts the area-common configuration information and a part of information other than the area-common configuration information in the cell-common configuration information of each neighboring cell. This can further reduce signaling overheads and improve resource utilization.

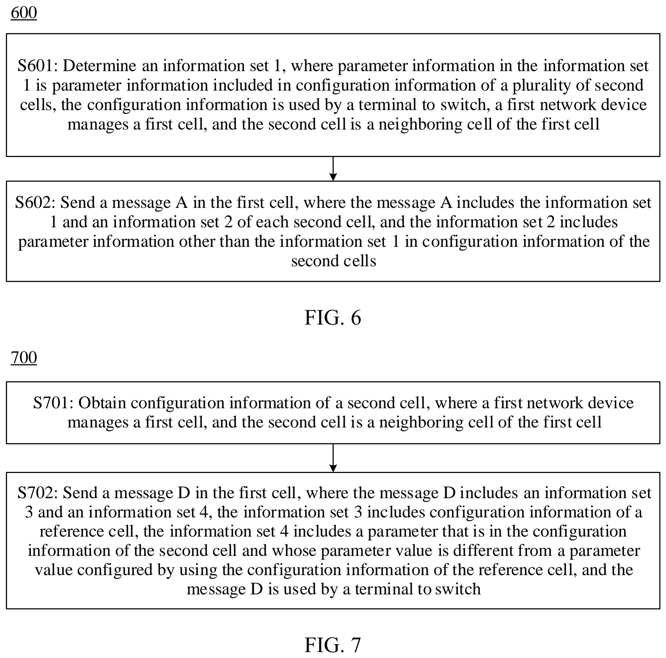

FIG. 6 is a schematic flowchart of a communication method 600 according to an embodiment of this application. The communication method 600 may be performed by a communication apparatus. The communication apparatus may be configured in a network device, for example, the communication apparatus may be a component (a chip, a chip system, or the like) configured in the network device; or the communication apparatus may be a network device. The following describes the communication method 600 by using an example in which the communication apparatus is a first network device.

S601: The first network device determines an information set 1, where parameter information in the information set 1 is parameter information included in configuration information of each of N second cells, the configuration information is used by a terminal to switch, the first network device manages a first cell, the second cell is a neighboring cell of the first cell, and N is an integer greater than or equal to 1.

The configuration information of the second cell may be used by the terminal to perform cell handover. For example, configuration information of a neighboring cell 1 is used by the terminal to switch to the neighboring cell 1. The configuration information of the second cell may also be referred to as handover configuration of the second cells.

The configuration information of the second cell may include K pieces of parameter information, and one piece of parameter information indicates a parameter of a parameter type and a parameter value of the parameter. The K pieces of parameter information indicate parameters of K parameter types and corresponding parameter values, and K is an integer greater than 1.

For example, the configuration information of the second cell includes parameter information used to indicate that the parameter type is a cell identifier, and the parameter information further indicates a value of an identifier of the second cell.

For another example, the configuration information of the second cell includes parameter information used to indicate that the parameter type is a subcarrier spacing (subcarrier spacing), and the parameter information further indicates a value of the subcarrier spacing used by the second cell, for example, 15 kHz or 30 kHz.

For another example, the configuration information of the second cell includes parameter information used to indicate that the parameter type is period duration of a synchronization signal, and the parameter information further indicates a value of the period duration of the synchronization signal of the second cell, for example, 5 ms, 10 ms, or 20 ms.

The configuration information of each of the N second cells includes L pieces of parameter information, and L is a positive integer less than or equal to K. In other words, parameter values of any one of L parameter types indicated by the L pieces of parameter information are the same in the configuration information of the N second cells. The information set 1 includes the L pieces of parameter information. In other words, the information set 1 is a set of common parameter information in the configuration information of the N second cells, and the information set 1 may be referred to as a common information set of the N cells.

For example, the N second cells are the neighboring cell 1, a neighboring cell 2, ..., and a neighboring cell N. Parameters of the K parameter types and parameter values of each type of parameter that are indicated by the configuration information of the N second cells are shown in Table 1. Configuration information of the neighboring cell 1 indicates that a parameter value of a parameter 1 is A₁, a parameter value of a parameter 2 is B, a parameter value of a parameter 3 is C₁, ..., and a parameter value of a parameter K is D. Configuration information of the neighboring cell 2 indicates that a parameter value of a parameter 1 is A₂, a parameter value of a parameter 2 is B, a parameter value of a parameter 3 is C₂, ..., and a parameter value of a parameter K is D. In addition, configuration information of the neighboring cell N indicates that a parameter value of a parameter 1 is A_{N}, a parameter value of a parameter 2 is B, a parameter value of a parameter 3 is C_{N}, ..., and a parameter value of a parameter K is D. Parameter values of the parameters 2 indicated by the configuration information of the N second cells are all B, and parameter values of the parameters K indicated by the configuration information of the N second cells are all D. The information set 1 determined by the first network device includes at least two pieces of parameter information. One piece of parameter information indicates that the parameter value of the parameter 2 is B, and the other piece of parameter information indicates that the parameter value of the parameter K is D. If the configuration information of the N second cells further includes other common parameter information, that is, the configuration information of the N second cells further includes other parameters whose parameter values are the same in the configuration information of the N second cells, the information set 1 further includes parameter information used to indicate a parameter value of the parameter.

**Table 1**

| Parameter type | Parameter value in a neighboring cell 1 | Parameter value in a neighboring cell 2 | ... | Parameter value in a neighboring cell N |
|---|---|---|---|---|
| Parameter 1 | A₁ | A₂ | ... | A_{N} |
| Parameter 2 | B | B | | B |
| Parameter 3 | C₁ | C₂ | | C_{N} |
| ... | ... | ... | | ... |
| Parameter K | D | D | | D |

For example, the configuration information of the second cell may include cell-common configuration information of the second cell. For example, the configuration information of the second cell may be denoted as CellConfigCommon, or may be denoted as NeighborCellConfigCommon or NeighCellConfigCommon. A name or a representation manner of the configuration information of the second cell is not limited in this application. CellConfigCommon may be represented as follows:

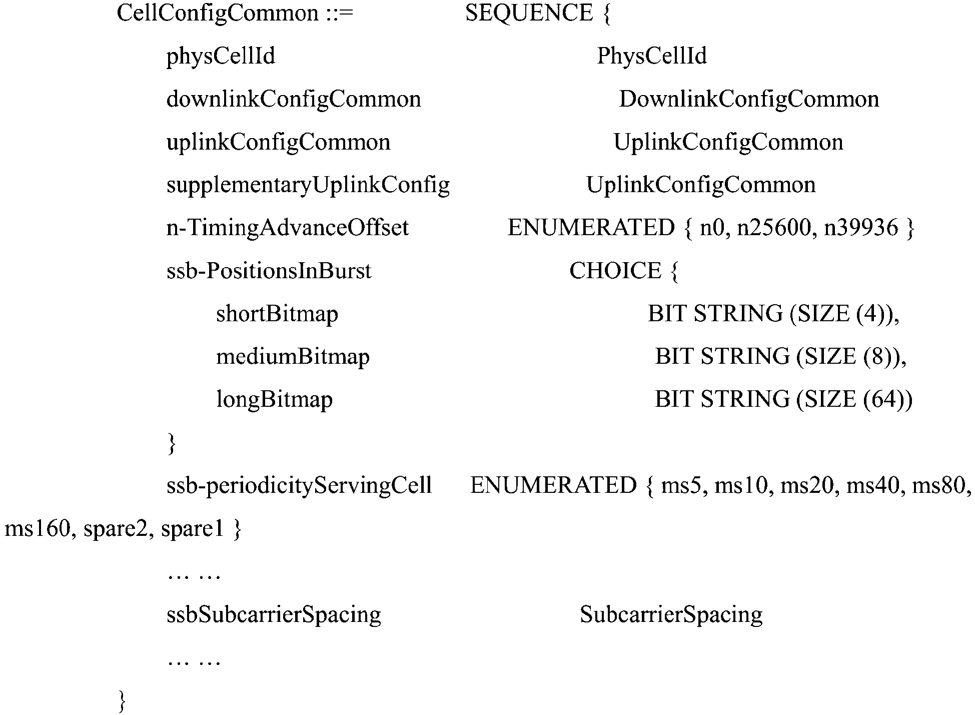

As described above, the configuration information of the second cell may include parameter information used to indicate a cell identifier, that is, physCellId. PhysCellId indicates a specific value of the cell identifier. Because cell identifiers of cells are different, the physCellId parameter information does not belong to the information set 1.

The configuration information may further include parameter information used to indicate a timing advance offset, for example, n-TimingAdvanceOffset. ENUMERATED following the parameter information indicates an enumeration manner used for the parameter information. A value of the parameter information is enumerated from {n0, n25600, n39936} as a timing advance offset of a cell. The value is applicable to adjustment of uplink timing advances of all uplink transmission in the second cell. If enumerated values of n-TimingAdvanceOffset parameter information in the configuration information of the N second cells are the same, for example, all indicate n25600, the n-TimingAdvanceOffset parameter information belongs to the information set 1. If enumerated values of n-TimingAdvanceOffset parameter information in at least two pieces of configuration information in the configuration information of the N second cells are different, the n-TimingAdvanceOffset parameter information does not belong to the information set 1.

The configuration information may further include parameter information used to indicate a location that is of a synchronization signal block and that is in a transmission set (or referred to as a burst set), for example, ssb-PositionsInBurst. CHOICE following the parameter information indicates a selection manner of the parameter information. The parameter information selects, from bitmaps of three lengths, that is, a short bitmap (shortBitmap) including 4 bits, a medium bitmap (mediumBitmap) including 8 bits, and a long bitmap (longBitmap) including 64 bits, a bitmap of one length to indicate the location that is of the synchronization signal block in the second cell and that is in the burst set. If bitmaps of a same length, for example, long bitmaps, are selected for ssb-PositionsInBurst parameter information in the configuration information of the N second cells, and information that is indicated by the long bitmaps and that is in the configuration information of the N second cells is the same, the ssb-PositionsInBurst parameter information belongs to the information set 1. If bitmaps of different lengths are selected for ssb-PositionsInBurst parameter information in the configuration information of the N second cells, or information that is indicated by the long bitmaps and that is in the configuration information of the N second cells is not the same, the ssb-PositionsInBurst parameter information belongs to the information set 1, n-TimingAdvanceOffset parameter information does not belong to the information set 1.

The configuration information may further include parameter information used to indicate a period of a synchronization signal block, for example, ssb-periodicityServingCell. A value of the parameter information may be enumerated from {ms5, ms10, ms20, ms40, ms80, ms160, spare2, spara1} in an enumeration manner. In this case, period duration of an SSB in the second cell is the value. If period duration enumerated by the ssb-PositionsInBurst parameter information in the configuration information of the N second cells has a same value, the ssb-periodicityServingCell parameter information belongs to the information set 1. If the period duration enumerated by the ssb-PositionsInBurst parameter information in the configuration information of the N second cells does not have a same value, the ssb-periodicityServingCell parameter information does not belong to the information set 1.

The configuration information may further include parameter information used to indicate a subcarrier spacing, for example, ssbSubcarrierSpacing. The parameter information indicates, through SubcarrierSpacing, a subcarrier spacing used by an SSB in the second cell. For example, the parameter information may indicate that the subcarrier spacing used by the SSB is 15 kHz, 30 kHz, 120 kHz, 240 kHz, or the like. The subcarrier spacing may be specifically related to a frequency range in which a carrier of the cell is located. Similarly, if subcarrier spacings indicated by SubcarrierSpacing in the configuration information of the N second cells are the same, the SubcarrierSpacing parameter information belongs to the information set 1. If the subcarrier spacings indicated by SubcarrierSpacing in the configuration information of the N second cells are not the same, the SubcarrierSpacing parameter information does not belong to the information set 1.

The configuration information may further include common downlink configuration information, for downlinkConfigCommon, and a specific value of one or more downlink common configuration parameters of the second cell is configured through DownlinkConfigCommon. If parameter values indicated by parameter information used to indicate one downlink common configuration parameter are the same in the configuration information of the N second cells, the parameter information used to indicate the downlink common configuration parameter belongs to the information set 1. If the parameter values indicated by the parameter information used to indicate the downlink common configuration parameter are not the same in the configuration information of the N second cells, the parameter information used to indicate the downlink common configuration parameter does not belong to the information set 1.

The configuration information further includes uplink common configuration information (for example, uplinkConfigCommon) and supplementary uplink configuration (for example, supplementaryUplinkConfig). Specific values of uplink common configuration parameters are separately configured through corresponding UplinkConfigCommon.

It should be understood that the parameter information included in the configuration information of the second cell is listed above as an example. In specific implementation, the configuration information of the second cell may include one or more types of parameter information described above, and the configuration information of the second cell may further include other parameter information. This is not limited in this application.

The foregoing describes the configuration information of the second cell and the information set 1. The following describes, by using an example, a specific implementation in which the first network device determines the information set 1. It should be understood that this application is not limited to the following implementations.

In an implementation, that the first network device determines the information set 1 includes: The first network device receives the configuration information of the N second cells from at least one second network device. In addition, the first network device determines the information set 1 based on the configuration information of the N second cells.

In an example, the at least one second network device includes an access network device that manages the N second cells, and each second network device may manage one or more of the N second cells. In other words, the first network device may obtain the configuration information of the N second cells from the access network device that manages the N second cells, and determine the information set 1 based on the obtained configuration information of the N second cells. For example, the N second cells include the neighboring cell 1 to the neighboring cell 3 of the first cell. A network device A manages the neighboring cell 1, and the network device A sends configuration information of the neighboring cell 1 to the first network device through a communication interface between the network device A and the first network device. A network device B manages the neighboring cell 2 and the neighboring cell 3. The network device B sends configuration information of the neighboring cell 2 and configuration information of the neighboring cell 3 to the first network device through a communication interface between the network device B and the first network device. It should be understood that a time sequence in which the network device B sends the configuration information of the neighboring cell 2 and the configuration information of the neighboring cell 3 to the first network device and whether the configuration information of the neighboring cell 2 and the configuration information of the neighboring cell 3 are carried in a same message for transmission are not limited in this application, and may be implemented based on a specific implementation requirement. After the first network device obtains the configuration information of the neighboring cell 1 to the neighboring cell 3, the first network device determines the information set 1 based on the configuration information of the neighboring cell 1 to the neighboring cell 3. The information set 1 includes common parameter information in the configuration information of the neighboring cell 1 to the neighboring cell 3. In other words, the configuration information of each of the neighboring cell 1 to the neighboring cell 3 includes the parameter information included in the information set 1.

Each of the communication interface between the network device A and the first network device and the communication interface between the network device B and the first network device may be a communication interface between access network devices. For example, the communication interface may be an X2 interface, an Xn interface, or an interface that is between access networks and that is defined in a future communication system.

Optionally, in a process in which the second network device establishes the communication interface with the first network device, the second network device sends, to the first network device, the configuration information of the second cell managed by the second network device.

In another example, the at least one second network device includes an operation, administration, and maintenance (operation, administration, and maintenance, OAM) device, and the OAM device is configured to operate, manage, and/or maintain an access network device. The OAM device may obtain the configuration information of the N second cells from one or more network devices that manage the N second cells, and then send the configuration information of the N second cells to the first network device. The first network device determines the information set 1 based on the obtained configuration information of the N second cells. For example, the first network device extracts the common parameter information from the configuration information of the N second cells, to obtain the information set 1.

In another example, the at least one second network device may include both an OAM device and an access network device that manages the second cell. For example, configuration information of at least one of the N second cells may be obtained by the first network device from the access network device that manages the at least one second cell. In addition, configuration information of second cells other than the at least one second cell in the N second cells may be obtained by the first network device from the OAM device. The first network device determines the information set 1 based on the obtained configuration information of the N second cells.

In the foregoing example, in addition to determining the information set 1, the first network device further determines an information set 2 including parameter information other than the information set 1 in the configuration information of each of the N second cells, that is, determines N information sets 2 of the N second cells. The information set 2 of a second cell is referred to as a dedicated information set of the second cell.

In another implementation, the first network device receives the information set 1 from the second network device. In addition, the first network device receives the N information sets 2 from the second network device, where the N information sets 2 respectively correspond to the N second cells. Each information set 2 includes the parameter information other than the information set 1 in configuration information of the second cell.

In an example, the second network device is the access network device that manages the N second cells. In other words, the N second cells are neighboring cells of the first cell managed by a same access network device (that is, the second network device). The second network device may determine that the N cells managed by the second network device are the neighboring cells of the first cell. In other words, the N cells are the N second cells. The second network device determines the common parameter information in the configuration information of the N second cells to obtain the information set 1. The parameter information other than the information set 1 in the configuration information of each of the N second cells is the information set 2 of the second cell. The second network device sends, to the first network device, the information set 1 and the N information sets 2 that are determined by the second network device. For example, the information set 1 and the N information sets 2 may be carried in a same message and sent to the first network device, or may be carried in different messages and sent to the first network device. This is not limited in this application. The first network device obtains the information set 1 and the N information sets 2 from the second network device.

Optionally, in a process of establishing the communication interface with the first network device, the second network device may send the information set 1 of the N second cells and the information set 2 of each second cell to the first network device.

In another example, the second network device is the OAM device. The OAM device may obtain the configuration information of the N second cells from the one or more network devices that manage the N second cells, determine the information set 1 based on the configuration information of the N second cells, and determine the information set 2 including the parameter information other than the information set 1 in the configuration information of each of the N second cells. The OAM device sends the information set 1 and the information set 2 of each of the N second cells to the first network device. The first network device obtains the information set 1 and the information set 2 of each of the N second cells from the OAM device.

In another implementation, the N second cells include cells managed by a plurality of second network devices. In other words, in this implementation, the second network device is an access network device, for example, may be a neighboring access network device of the first network device. The first network device receives a common information set of the second cell managed by each second network device. In addition, the first network device receives a dedicated information set of the second cell managed by each second network device.

For example, the N second cells include a neighboring cell 1, a neighboring cell 2, a neighboring cell 3, and a neighboring cell 4, that is, N=4. The neighboring cell 1 and the neighboring cell 2 are cells managed by the network device A. The network device A may determine common parameter information in the configuration information of the neighboring cell 1 and the configuration information of the neighboring cell 2, to obtain a common information set A, and determine parameter information other than the common information set A in the configuration information of each of the neighboring cell 1 and the neighboring cell 2, to obtain a dedicated information set A of each neighboring cell. The network device A sends the common information set A and two dedicated information sets A that are determined by the network device A to the first network device. The neighboring cell 3 and the neighboring cell 4 are cells managed by the network device B. The network device B may determine common parameter information in the configuration information of the neighboring cell 3 and the configuration information of the neighboring cell 4, to obtain a common information set B, a dedicated information parameter set B of the neighboring cell 3, and a dedicated information set B of the neighboring cell 4. The network device B sends the common information set B and the two dedicated information sets B that are determined by the network device B to the first network device. The first network device may determine the information set 1 based on the obtained common information set A and the obtained common information set B. The parameter information included in the information set 1 is parameter information included in both the common information set A and the common information set B. In other words, the first network device further extracts the common parameter information from the common information set A and the common information set B, to obtain the information set 1. In addition, the first network device may determine the information set 2 of each of the four neighboring cells. The neighboring cell 1 is used as an example. The information set 2 of the neighboring cell 1 includes the dedicated information set A of the neighboring cell 1, and further includes the parameter information in the common information set A other than the parameter information included in the information set 1. Other neighboring cells determine a corresponding information set 2 in a same manner.

In another implementation, the first network device may determine, based on the obtained common information set A and the obtained common information set B, an information set that is denoted as an information set 5. The information set 5 includes the common information set A and the common information set B. In other words, the common information set A and the common information set B are two subsets of the information set 5. In other words, the first network device directly combines the parameter information in the common information set A and the parameter information in the common information set B, to obtain the information set 5. In this implementation, the first network device may broadcast the information set 5. In other words, the first network device does not modify formats of the information sets received from different second network devices, but only combines the information sets and then broadcasts the information sets in the first cell. This can reduce implementation complexity of the first network device. Similarly, the first network device may combine and broadcast the dedicated information set of each of the four neighboring cells that is obtained by the first network device from the network device A and the network device B. The terminal may obtain each common information set and each dedicated information set from the received combined information set. Each information set (including the common information set and the dedicated information set) includes an identifier of each corresponding neighboring cell. In this way, the terminal can determine the configuration information of the neighboring cell based on the common information set including the identifier of the neighboring cell and the dedicated information set including the identifier of the neighboring cell.

Optionally, the first network device sends indication information to the second network device, where the indication information indicates that the first network device may send the configuration information of the plurality of second cells by extracting the common information set from the configuration information of the plurality of second cells. The second network device sends response information to the first network device, where the response information indicates the second network device to confirm that the first network device sends the configuration information of the plurality of second cells by extracting the common information set from the configuration information of the plurality of second cells. When receiving the response information, the first network device performs S601 to determine the information set 1 and the information set 2 of each of the N second cells, and then performs S602.

In an implementation, the first network device may notify, by using the indication information, the second network device that the first network device may send the configuration information of the plurality of second cells by extracting the common information set from the configuration information of the plurality of second cells. After the second network device sends the response information to confirm the manner, the second network device sends the extracted configuration information of the plurality of second cells to the first network device. Specifically, the second network device sends the common information set of the configuration information of the plurality of second cells and the dedicated information set of each of the plurality of second cells to the first network device.

S602: The first network device sends a message A in the first cell, where the message A includes the information set 1 and the information set 2 of each second cell, and the information set 2 includes parameter information other than the information set 1 in the configuration information of the second cell.

The message A is a broadcast message of the first network device in the first cell. For example, the message A may be a system information block (system information block, SIB) of the first cell.

That the message A includes the information set 1 and the information set 2 of each second cell may be understood as that the message A includes the common information set (that is, the information set 1) in the configuration information of the N second cells and the dedicated information set (that is, the information set 2) in the configuration information of each of the N second cells.

For example, the configuration information of the N second cells may be shown in Table 1, and the information set 1 and the information set 2 of each second cell that are included in the message A may be shown in Table 2. As described above in Table 1, the information set 1 includes at least two pieces of parameter information. One piece of parameter information indicates that the parameter value of the parameter 2 is B, and the other piece of parameter information indicates that the parameter value of the parameter K is D. If the configuration information of the N second cells further includes other common parameter information, the information set 1 further includes parameter information used to indicate a parameter value of a parameter. The message A includes the information set 1. The parameter 1 and the parameter 3 have different parameter values in the configuration information of the N second cells, so that the information set 2 of each of the N neighboring cells includes the parameter information used to indicate the parameter value of the parameter 1 and the parameter information used to indicate the parameter value of the parameter 3.

**Table 2**

| | Parameter type | Parameter value |
|---|---|---|
| Information set 1 | Parameter 2 | B |
| | ... | ... |
| | Parameter K | D |
| Information set 2 of a neighboring cell 1 | Parameter 1 | A₁ |
| | Parameter 3 | C₁ |
| | ... | ... |
| Information set 2 of a neighboring cell 2 | Parameter 1 | A₂ |
| | Parameter 3 | C₂ |
| | ... | ... |
| ... | ... | ... |
| Information set 2 of a neighboring cell N | Parameter 1 | A_{N} |
| | Parameter 3 | C_{N} |
| | ... | ... |

According to the foregoing solution, the first network device sends the message A in the first cell, where the message A includes handover configuration of the plurality of neighboring cells of the first cell, and the message A includes only a common information set (that is, the information set 1) in the handover configuration of the plurality of neighboring cells. In comparison with a manner in which the first network device separately sends the configuration information of the plurality of neighboring cells in the first cell, this manner can reduce unnecessary resource overheads caused by repeated transmission of the information set 1 in the configuration information of the plurality of neighboring cells, and improve resource utilization.

In an implementation, the message A sent by the first network device may include parameter information in N+1 information sets, as shown in Table 2. In other words, the configuration information of the N second cells includes only each piece of parameter information in the information set 1 and each piece of parameter information in the information set 2 of each second cell.

In another implementation, the message A may include N+1 pieces of configuration information, for example, denoted as configuration information 0 to configuration information N. The configuration information 0 includes the information set 1, and the configuration information 1 to the configuration information N each include the information set 2 of the N neighboring cells. A format of each piece of configuration information in the message A may be the same as a format of the configuration information of the second cell described above. In other words, each piece of configuration information includes K pieces of parameter information. Parameter information that is in the configuration information 0 and that belongs to the information set 1 indicates a common parameter value of the parameter in the configuration information of the N neighboring cells. A parameter value of a parameter indicated by parameter information that is in the configuration information 0 and that does not belong to the information set 1 is null (Null). For example, null may be represented by using one bit. For example, 0 indicates null. In the configuration information 1 to the configuration information N, the parameter information that belongs to the information set 1 indicates that the parameter value of the parameter is null. The parameter information that does not belong to the information set 1 (that is, the information set 2 that belongs to the second cell) indicates the parameter value of the parameter in the corresponding second cell.

For example, the configuration information of the N second cells may be shown in Table 1, and the N+1 pieces of configuration information that may be included in the message A are shown in Table 3. The configuration information 0 includes the information set 1. The parameter information that belongs to the information set 1 and that is in the configuration information 0, for example, the parameter information used to indicate the parameter 2 and the parameter K, respectively indicate the common values B and D of the parameter 2 and the parameter K in the N second cells. A parameter value indicated by the parameter information that does not belong to the information set 1, for example, the parameter information used to indicate the parameter 1 and the parameter 3 is Null.

**Table 3**

| | Parameter type | Parameter value |
|---|---|---|
| Configuration information 0 | Parameter 1 | Null |
| (including an information set 1) | Parameter 2 | B |
| | Parameter 3 | Null |
| | ... | ... |
| | Parameter K | D |
| Configuration information 1 (including an information set 2 of a neighboring cell 1) | Parameter 1 | A₁ |
| | Parameter 2 | Null |
| | Parameter 3 | C₁ |
| | ... | ... |
| | Parameter K | Null |
| Configuration information 2 (including an information set 2 of a neighboring cell 2) | Parameter 1 | A₂ |
| | Parameter 2 | Null |
| | Parameter 3 | C₂ |
| | ... | ... |
| | Parameter K | Null |
| ... | ... | ... |
| Configuration information N (including an information set 2 of a neighboring cell N) | Parameter 1 | A_{N} |
| | Parameter 2 | Null |
| | Parameter 3 | C_{N} |
| | ... | ... |
| | Parameter K | Null |

According to the foregoing solution, a format of the configuration information of the current cell may be reused to transmit the common parameter information, so that implementation complexity can be reduced. Only one bit is required for each piece of parameter information to indicate null. In comparison with repeatedly sending public parameter information of a plurality of bits, signaling overheads can still be reduced, and resource utilization can be improved.

In an implementation, the terminal may receive the message A from the first network device when remaining service duration of the first cell is less than or equal to a threshold.

If the first cell is an earth fixed cell, the terminal may determine service time of the first cell based on remaining service time (denoted as t-service) parameter of the first cell obtained from the first network device. When the remaining service time of the first cell is less than or equal to a threshold, the terminal receives the message A from the first network device. The threshold may be configured by the first network device for the terminal, or may be predefined. In this implementation, there is a high probability that the terminal is to switch when the service duration of the terminal in the first cell is less than or equal to the threshold. Therefore, the terminal may receive the message A, so that the terminal can obtain configuration information used for handover to a neighboring cell, and switch to the neighboring cell in time based on the configuration information of the neighboring cell when handover is required. However, a probability that the terminal is to switch when the service duration of the terminal in the first cell is greater than the threshold is low. Therefore, the terminal may not receive the message A, so that unnecessary power consumption of the terminal can be reduced.

In another implementation, when the terminal is located at an edge location of the first cell, the terminal receives the message A from the first network device.

For example, the edge location may be indicated by the first network device.

For example, the first network device may indicate a signal quality threshold to the terminal. When signal quality of the first cell is less than or equal to the signal quality threshold, the terminal is located at the edge location of the first cell. The terminal may determine, based on the signal quality threshold, whether the terminal is located at the edge location of the first cell. The terminal receives the message A from the first network device.

For another example, the first network device may send indication information to the terminal. The indication information indicates that the terminal is located at the edge location of the first cell. The terminal determines, based on the indication information, that the terminal is located at the edge location of the first cell. The terminal receives the message A from the first network device.

For another example, the first network device may broadcast location range information. For example, the location range information indicates a center location range and/or an edge location range of the first cell. The terminal determines the location range of the terminal in the first cell based on a location of the terminal. For example, the terminal determines, based on the location range information, that the terminal is located at the edge location of the first cell, and the terminal receives the message A from the first network device.

In this implementation, when the terminal is located at the edge location of the first cell, there is a high probability that the terminal leaves the coverage range of the first cell. Correspondingly, there is a high probability that the terminal is to switch. Therefore, the terminal may receive the message A, so that the terminal can obtain configuration information used for handover to a neighboring cell, and switch to the neighboring cell in time based on the configuration information of the neighboring cell when handover is required. However, a probability that the terminal is to switch at a non-edge location of the first cell is low. Therefore, the terminal may not receive the message A, so that unnecessary power consumption of the terminal can be reduced.

In an implementation, the message A includes a first identifier, the first identifier identifies a first area, and the first area includes the N second cells.

If the N second cells belong to the first area, the information set 1 in the message A may be considered as area-common configuration information of cells in the first area.

The first network device may notify, by using the message A, the terminal that the N second cells belong to the first area. To be specific, the message A includes the first identifier, and the information set 2 of each second cell in the message A includes an identifier of the second cell. The terminal may determine, based on identifiers of the N second cells included in the message A, that the N second cells belong to the first area corresponding to the first identifier.

In an implementation, the method 600 may further include S603: The first network device sends a message B in the first cell, where the message B includes the first identifier, and the message B indicates that the configuration information of the cell in the first area is updated.

For example, after the first network device sends the message A, if at least one piece of parameter information in the configuration information of the N second cells is updated, the first network device sends the message B, where the message B includes the first identifier, and notifies, by using the message B, that the configuration information of the cell in the first area is updated. In this way, the terminal located in the first area may determine, based on the first identifier in the message B, that the configuration information of the cell in the first area is updated, to receive the updated configuration information of the cell in the first area. The first network device sends an updated message A, where the message A includes updated configuration information of the N second cells in the first area. The updated message A includes the N+1 information sets, and parameter information in one information set is common parameter information included in the configuration information of the N second cells. One of the other N information sets includes parameter information other than the common parameter information in configuration information of one of the N second cells. In other words, the updated message A may have a same format as the message A, and include the common information set of the N second cells in the first area and the dedicated information set of each of the N second cells. The terminal located in the first area receives the updated message A based on the first identifier included in the message B, and obtains the updated configuration information of the cell in the first area.

For example, the message B and the message A may be different SIBs. For example, the message B may be an SIB 1, and the message A may be an SIB other than the SIB 1.

For another example, after the first network device sends the message A, at least one piece of parameter information in the configuration information of the N second cells is updated. In this case, after the first network device sends the message B, the first network device sends a message C. The message C includes the updated parameter information in the configuration information of the cell in the first area. In other words, the first network device may indicate, by using the message B, that the configuration information of the cell in the first area has been updated, and then send the updated parameter information in the configuration information of the cell in the first area by using the message C. In this way, the terminal located in the first area may determine, based on the message B, that the configuration information of the cell in the first area has been updated, to receive the message C and obtain the updated parameter information. The terminal may determine current configuration information of the N second cells based on the updated parameter information and the parameter information other than the updated parameter information in the message A, so that the terminal performs handover based on the configuration information of the second cell.

For example, the message B and the message C may be different SIBs. For example, the message B may be the SIB 1, and the message A may be an SIB other than the SIB 1.

According to the foregoing solution, when the configuration information of the cell in the first area is updated, the first network device may notify, by using the message B, that the configuration information of the cell in the first area is updated, so that the terminal in the first area can determine, based on the message B, that the configuration information of the cell in the first area is updated. In this way, the updated configuration information (for example, the updated message A or the updated message C) of the cell is received. In addition, a terminal outside the first area may determine, based on the message B, that configuration information of a cell in an area in which the terminal is located is not updated. Therefore, the updated configuration information of the cell does not need to be received, so that the terminal can be prevented from receiving unnecessary information, thereby reducing unnecessary power consumption.

Optionally, when the parameter information in the configuration information of the cell in the first area is deleted, for example, some or all parameter information in configuration information of a second cell is deleted, the first network device may not trigger an update procedure of the configuration information of the cell in the first area. For example, the first network device does not send the message B and the updated message A. That all parameter information in the configuration information of the second cell is deleted may be understood as that the first area no longer includes the second cell. If the first network device determines that parameter information is added to the configuration information of the cell in the first area, a value of a parameter indicated by one or more pieces of parameter information is changed, or the second cell is added to the first area, the first network device triggers the update procedure of the configuration information of the cell in the first area. For example, the procedure includes: The first network device sends the message B, and sends the updated message A or sends the message C including the updated parameter information. In other words, in this optional implementation, that the message B described above indicates that the configuration information of the cell in the first area is updated includes: The parameter information is added to the configuration information of the cell in the first area, the value of the parameter indicated by the one or more pieces of parameter information is changed, or the second cell is added to the first area (that is, the configuration information of the second cell is added to the configuration information of the cell in the first cell). That the message B indicates that the configuration information of the cell in the first area is updated does not include: A part or all of the parameter information in the configuration information of the second cell in the first area is deleted.

The terminal may obtain the handover configuration of the second cell by receiving the message A (or the updated message A if the message A is updated). For example, the terminal receives the message A, and may determine the configuration information of the second cell based on the information set 1 in the message A and the information set 2 of the second cell in the message A. In other words, the configuration information of the second cell includes the information set 1 and the information set 2 of the second cell.

Specifically, the terminal determines, based on the information set 1 and the information set 2 of the second cell in the message A, cell-common configuration information of the second cell, that is, same part of information in the handover configuration of the second cell for different terminals.

In an implementation, parameter values indicated by same-type parameter information other than a cell identifier in cell-common configuration information of all the second cells in the first area are the same. To be specific, all parameter information other than the parameter information used to indicate the cell identifier in the cell-common configuration information of the plurality of second cells is common parameter information. The network device sends a message including the common parameter information in the cell-common configuration information of the plurality of second cells. In an example, the message further includes the identifier of the first area, and the terminal may determine, based on the identifier of the first area in the message, that the parameter values indicated by the same-type parameter information other than an identifier of the neighboring cell in the cell-common configuration information of each neighboring cell in the first area are the same. The terminal may determine the cell-common configuration information of the neighboring cell in the first area based on the message. In another example, the message further includes an identifier of each neighboring cell in the first area. The terminal may determine, based on the message, that the parameter values of the same-type parameter information other than the identifier of the neighboring cell in the cell-common configuration information of the neighboring cell corresponding to the identifier included in the message are the same. The terminal may determine, based on the message, the cell-common configuration information of the neighboring cell corresponding to the identifier included in the message.

In another implementation, the first access network device broadcasts the cell-common configuration information. For example, the cell-common configuration information may be applied to all cells corresponding to a system information area ID (systemInformationAreaID). The first access network device may further broadcast indication information. The indication information indicates that the cell-common configuration information may be applied to all cells corresponding to the system information area ID. The indication information may be included in the cell-common configuration information, or may be included in same system information as the cell-common configuration information. For example, the first access network device further broadcasts a cell list. The cell-common configuration information is applicable to all cells in the cell list. The cell list and the cell-common configuration information may be included in a same system information, or the cell list may be included in the cell-common configuration information.

The method 600 may further include S604: The terminal receives terminal-specific configuration information of the terminal in the configuration information of the second cell from the network device. For example, the terminal-specific configuration information may be carried in an RRC reconfiguration message of the terminal. The terminal may determine, based on the cell-common configuration information of the second cell and the terminal-specific configuration information, complete configuration information used by the terminal to switch to the second cell. In other words, the complete configuration information of the second cell includes the cell-common configuration information. The cell-common configuration information includes area-common configuration information (that is, the information set 1, or may be referred to as a common information set), cell-specific configuration information (that is, the information set 2, or may be referred to as a dedicated information set), and the terminal-specific configuration information of the terminal in the second cell.

The foregoing describes, based on one second cell, a manner in which the terminal obtains the complete configuration information used for handover to the second cell. The terminal may determine, in a same manner, complete configuration information used for handover to another second cell.

The method 600 may further include S605: The first network device may send a handover indication message to the terminal, where the handover indication message indicates the terminal to switch to a target cell.

For example, the handover indication message may include a number of a second cell, and the second cell corresponding to the number is the target cell to which the terminal switches. For example, the number may be a cell global identifier (cell global identifier, CGI). Alternatively, the handover indication message may include a frequency of the second cell and a physical cell identifier (physical cell identifier, PCI) of the second cell. The terminal may determine the target cell based on the frequency and the PCI in the handover indication message. The terminal may determine, based on the handover indication message, to switch to the target cell, and the terminal may switch to the target cell based on the obtained complete configuration information of the target cell (or based on some or all of the complete configuration information of the target cell). Specifically, the terminal may perform, based on the configuration information of the target cell, a random access process with the target cell, and establish a communication connection to a network device that manages the target cell. Further, the terminal may receive system information of the target cell in the target cell, and use the target cell as a serving cell for communication.

The foregoing describes the solution of the embodiment shown in FIG. 6. In the embodiment shown in FIG. 6, the source network device broadcasts the message A, where the message A includes the configuration information of the N second cells. Specifically, a manner in which the message A carries the configuration information of the N second cells is that the message A includes the common information set (that is, the information set 1) in the configuration information of the N second cells and the dedicated information set (that is, the information set 2) in the configuration information of each of the N second cells. In this way, the terminal can determine the configuration information of the second cell based on the common information set and the dedicated information set of the second cell that are in the message A. In this manner, signaling overheads in the first cell can be reduced, and resource utilization can be improved.

With reference to the solution in the embodiment shown in FIG. 6, in an implementation, the first network device may determine the common information set in the configuration information of the first cell and the configuration information of the at least one second cell, the dedicated information set of the first cell, and the dedicated information set of each of the at least one second cell. The configuration information of the first cell includes related parameter information used by the terminal to communicate with the first network device in the first cell. The first network device may send the message A. The message A includes the configuration information of the at least one second cell and the common information set in the configuration information of the first cell, and further includes the dedicated information set of the first cell and the dedicated information set of each of the at least one cell. For example, the message A sent by the first network device may include the common information set of the configuration information of the first cell and the configuration information of the second cell, the dedicated information set of the first cell, and the dedicated information set of the second cell.

According to this implementation, the first network device may perform information extraction on configuration information of the serving cell and the configuration information of the at least one neighboring cell, to obtain the common information set and the dedicated information set of each cell, and broadcast the common information set and the dedicated information set in the serving cell. This can reduce signaling overheads caused by repeated sending of the common information set in the configuration information of the serving cell and the configuration information of the at least one neighboring cell, and improve resource utilization.

This application further provides a manner in which the source network device broadcasts the configuration information of the neighboring cell. For example, the broadcast message sent by the first network device may include the configuration information of the reference cell and incremental configuration that is in the configuration information of the neighboring cell and that is relative to the configuration information of the reference cell. The following describes the manner with reference to FIG. 7.

FIG. 7 is a schematic flowchart of a communication method 700 according to an embodiment of this application. The communication method 700 may be performed by a communication apparatus. The communication apparatus may be configured in a network device. For example, the communication apparatus may be a component (a chip, a chip system, or the like) configured in the network device. Alternatively, the communication apparatus may be a network device. The following describes the communication method 700 by using an example in which the communication apparatus is a first network device.

It should be understood that, for a same part in the method 700 and the method 600, refer to the foregoing descriptions of the method 600 for implementation. Details are not described herein again. The method 700 includes but is not limited to the following steps.

S701: The first network device obtains configuration information of a second cell, where the first network device manages a first cell, and the second cell is a neighboring cell of the first cell.

For example, the first network device may obtain the configuration information from an access network device that manages the second cell. Alternatively, the first network device may obtain the configuration information of the second cell by using an OAM device.

The configuration information of the second cell is used by a terminal that establishes a communication connection to the first network device to switch to the second cell in the first cell. For example, the configuration information of the second cell includes K pieces of parameter information, and the K pieces of parameter information are used to indicate parameter values of the K parameters.

For example, the configuration information of the second cell may include cell-common configuration information of the second cell. For example, the configuration information of the second cell may be CellConfigCommon described above. However, this application is not limited thereto.

S702: The first network device sends a message D in the first cell, where the message D includes an information set 3 and an information set 4, the information set 3 includes configuration information of a reference cell, the information set 4 includes a parameter that is in the configuration information of the second cell and whose parameter value is different from a parameter value configured by using the configuration information of the reference cell, and the message D is used by the terminal to switch.

The information set 4 may be referred to as incremental configuration in the configuration information of the second cell relative to the configuration information of the reference cell. In the embodiment shown in FIG. 7, an example in which the message D includes incremental configuration of one second cell is used for description. It should be understood that the message D may include incremental configuration of one or more neighboring cells. The incremental configuration of each neighboring cell is obtained by comparing the configuration information of the neighboring cell obtained by the first network device with the configuration information of the reference cell. In other words, the message D may include incremental configuration of one or more second cells, and the second cell described in this embodiment may be any one of the one or more second cells.

For example, the message D is a broadcast message of the first network device in the first cell. For example, the message D may be an SIB of the first cell.

In an example, the reference cell and the second cell may be different neighboring cells of the first cell. The terminal may obtain the configuration information of a plurality of neighboring cells of the first cell by using the message D.

In another example, the reference cell may be the first cell. The terminal may obtain the configuration information of the first cell and the at least one neighboring cell of the first cell by using the message D.

In another example, the reference cell may be a virtual cell. For example, the first network device determines configuration information of a plurality of cells, where the plurality of cells include the first cell and the at least one second cell, or the plurality of cells include the plurality of second cells. The first network device may determine configuration information of one virtual cell based on the configuration information of the plurality of cells, where the configuration information of the virtual cell is configuration information that includes parameter values of the K parameters and that is extracted based on the configuration information of the plurality of cells. The configuration information of the virtual cell is used as the configuration information of the reference cell. In this way, incremental configuration of the configuration information of the plurality of cells relative to the configuration information of the virtual cell can be minimized. Signaling overheads of the message D can be reduced.

For example, the K parameters and the parameter values of the K parameters that are indicated by the configuration information of the reference cell and the configuration information of the second cell may be shown in Table 4. The information set 3 in the message D includes the K parameters of the reference cell. A parameter value of a parameter 1 is A, a parameter value of a parameter 2 is B, a parameter value of a parameter 3 is C, ..., and a parameter value of a parameter K is D. As shown in Table 4, the parameter value of the parameter 2 and the parameter value of the parameter K in the configuration information of the second cell are respectively the same as the parameter value of the parameter 2 and the parameter value of the parameter K in the reference cell, that is, are respectively B and D. The parameter values of the parameter 1 and the parameter 3 in the configuration information of the reference cell and the configuration information of the second cell are different. In this case, the information set 4 in the message D includes the parameter 1 and the parameter 3 in the configuration information of the second cell. In the information set 4, the parameter value of the parameter 1 is A₂, and the parameter value of the parameter 3 is C₂. If the configuration information of the reference cell and the configuration information of the second cell further include another parameter with a different parameter value, the information set 4 includes the parameter.

**Table 4**

| Parameter type | Parameter value in a reference cell | Parameter value in a second cell |
|---|---|---|
| Parameter 1 | A | A₂ |
| Parameter 2 | B | B |
| Parameter 3 | C | C₂ |
| ... | ... | ... |
| Parameter K | D | D |

The information set 3 and the information set 4 that are included in the message D may be shown in Table 5.

**Table 5**

| | Parameter type | Parameter value |
|---|---|---|
| Information set 3 | Parameter 1 | A |
| | Parameter 2 | B |
| | Parameter 3 | C |
| | ... | ... |
| | Parameter K | D |
| Information set 4 | Parameter 1 | A₂ |
| | Parameter 3 | C₂ |
| | ... | ... |

The terminal receives the message D, and may determine the configuration information of the second cell based on a parameter in the information set 4 and the information set 3 other than the parameter included in the information set 4. Specifically, the terminal may determine that the configuration information of the second cell includes parameters in the information set 4, that is, the parameter value of the parameter 1 being A₂, a value of the parameter 3 being C₂, and another parameter included in the information set 4. The terminal may further determine that the configuration information of the second cell includes a parameter in the information set 3 other than the parameter included in the information set 4. For example, the configuration information of the second cell includes the parameter 2 and the parameter K that are included in the information set 3. The parameter value of the parameter 2 is B, and the parameter value of the parameter K is D. In this way, the terminal can determine the configuration information of the second cell. The first network device sends the configuration information of the reference cell and the configuration information of the second cell in an incremental configuration manner, so that repeated sending of same information can be reduced, signaling overheads can be reduced, and resource utilization can be improved.

The message D may include configuration information of a plurality of neighboring cells of the first cell. For example, the message D includes the information set 3 of the configuration information of the reference cell, and further includes an information set 4 of a neighboring cell 1 and an information set 4 of a neighboring cell 2. For example, configuration information of the reference cell, the neighboring cell 1, and the neighboring cell 2 may be shown in Table 6. At least parameter values of a parameter 1 and a parameter 3 in the configuration information of the neighboring cell 1 are different from those in the configuration information of the reference cell, and the information set 4 of the neighboring cell 1 includes at least the parameter 1 and the parameter 3. Only a parameter value of the parameter K in the configuration information of the neighboring cell 2 is different from that in the configuration information of the reference cell. In other words, parameter values of the parameter 1 to the parameter K-1 are the same. In this case, the information set 4 of the neighboring cell 2 includes only the parameter K, and the parameter value of the parameter K is D₂.

**Table 6**

| Parameter type | Parameter value in a reference cell | Parameter value in a neighboring cell 1 | Parameter value in a neighboring cell 2 |
|---|---|---|---|
| Parameter 1 | A | A₂ | A |
| Parameter 2 | B | B | B |
| Parameter 3 | C | C₂ | C |
| ... | ... | ... | ... |
| Parameter K | D | D | D₂ |

The information set 3 and the information set 4 of each neighboring cell that are included in the message D may be shown in Table 7.

**Table 7**

| | Parameter type | Parameter value |
|---|---|---|
| Information set 3 | Parameter 1 | A |
| | Parameter 2 | B |
| | Parameter 3 | C |
| | ... | ... |
| | Parameter K | D |
| Information set 4 of a neighboring cell 1 | Parameter 1 | A₂ |
| | Parameter 3 | C₂ |
| | ... | ... |
| Information set 4 of a neighboring cell 2 | Parameter K | D₂ |

Based on the foregoing example, after determining that the message D includes the configuration information of the reference cell, the neighboring cell 1, and the neighboring cell 2, the first network device may separately compare the configuration information of the reference cell with the configuration information of the neighboring cell 1 and the configuration information of the neighboring cell 2. The message D includes the configuration information of the reference cell and incremental configuration in the configuration information of each neighboring cell compared with the configuration information of the reference cell. This can reduce repeated sending of same information, reduce signaling overheads, and improve resource utilization.

For example, the message D includes configuration information of a neighboring cell that belongs to the first area, the message D further includes a first identifier, and the first identifier identifies the first area.

It should be understood that both the message D provided in the embodiment shown in FIG. 7 and the message A in the embodiment shown in FIG. 6 are messages including the configuration information of the neighboring cell. A manner in which the message D carries the configuration information of the neighboring cell is different from a manner in which the message A carries the configuration information of the neighboring cell. The message D provided in the embodiment shown in FIG. 7 may replace the message A in the embodiment shown in FIG. 6, and is used as a message for broadcasting the configuration information of the neighboring cell. The implementation in the embodiment shown in FIG. 6 may be applied to the embodiment shown in FIG. 7 when there is no logical conflict. For brevity, each implementation in the embodiment shown in FIG. 7 is not described in detail herein again.

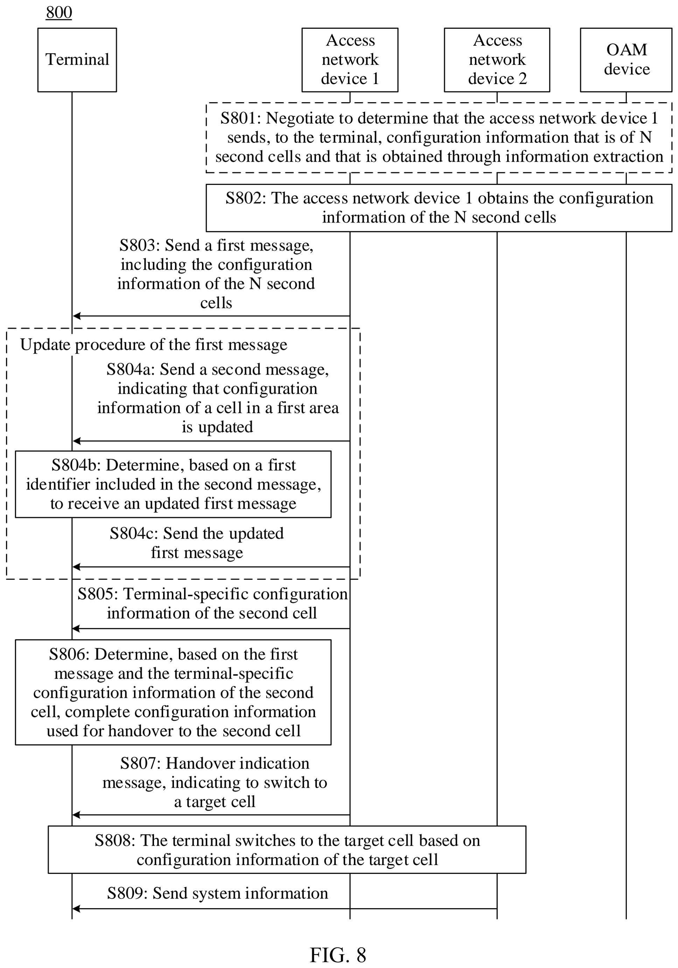

FIG. 8 is a schematic flowchart of a communication method 800 according to an embodiment of this application. It should be understood that parts in the method 800 that are the same as those in the method 600 and the method 700 are merely briefly described or are not described again. For details, refer to the foregoing descriptions of the method 600 and the method 700 for implementation. The method 800 includes but is not limited to the following steps.

Optionally, in S801, an access network device 1 negotiates with the at least one second network device to determine that a first network device sends, to a terminal, configuration information that is of N second cells and that is obtained through information extraction.

In an example, the configuration information of the N second cells obtained through information extraction includes a common information set of the N second cells and a dedicated information set of each of the N second cells, that is, the extraction manner in the embodiment shown in FIG. 6.

In another example, the configuration information of the N second cells obtained after information extraction includes the configuration information of the reference cell and the incremental configuration of the configuration information of the N second cells relative to the configuration information of the reference cell, that is, the extraction manner in the embodiment shown in FIG. 7.

Specifically, S802 may include S802a: The access network device 1 sends indication information to the at least one second network device, where the indication information indicates that the access network device 1 may send, to the terminal, the configuration information of the N second cells obtained through information extraction. In addition, S802 may include S802b: The at least one second network device sends response information to the access network device 1, where the response information is used to determine to send, to the terminal, the configuration information of the N second cells obtained through information extraction.

S802: The access network device 1 obtains the configuration information of the N second cells.

The access network device 1 (that is, an example of the first network device) may obtain the configuration information of the N second cells from the at least one second network device. For example, the access network device 1 may obtain the configuration information of the N second cells from an OAM device. Alternatively, the access network device 1 may obtain the configuration information of the N cells from at least one access network device that manages the N second cells. The at least one access network device that manages the N second cells includes an access network device 2 shown in FIG. 8. Alternatively, the access network device 1 obtains configuration information of a part of the N second cells from the OAM device, and obtains configuration information of the other cells from an access network device that manages the other cells of the N second cells.

Optionally, the access network device 1 may obtain the configuration information of the plurality of second cells from one second network device (for example, an OAM or access network device). The configuration information of the plurality of second cells may be the configuration information of the plurality of second cells that is obtained after the second network device performs information extraction. For example, after performing information extraction on the configuration information of the plurality of second cells, the second network device obtains the common information set in the configuration information of the plurality of second cells and a dedicated information set of each of the plurality of second cells. The second network device sends the common information set and the dedicated information set of each of the plurality of second cells to the access network device 1. In an implementation, the second network device may perform S801 of negotiating with the access network device 1 to determine that the access network device 1 sends, to the terminal, the configuration information of the N second cells obtained through information extraction. The second network device sends, to the access network device 1, the configuration information of the plurality of second cells obtained through information extraction.

S803: The access network device 1 sends a first message, where the first message includes the configuration information of the N second cells.

For example, the first message may be the message A in the embodiment shown in FIG. 6, and the first message includes the common information sets of the N second cells and the N dedicated information sets of the N second cells.

For another example, the first message may be the message D in the embodiment shown in FIG. 7, and the first message includes the configuration information of the reference cell and the N piece of incremental configuration of the N second cells.

Correspondingly, the terminal receives the first message from the access network device 1, and obtains the configuration information of the N second cells.

In an implementation, the first message includes a first identifier, and the first identifier identifies the first area that includes the N second cells.

Optionally, in S804, the access network device 1 initiates an update procedure of the first message.

Specifically, S804 may include S804a: The access network device 1 sends a second message, where the second message indicates that configuration information of a cell in the first area is updated. In other words, the second message is an example of the foregoing message B. The second message includes the first identifier. S804 further includes S804b: The terminal determines, based on the second message, that configuration information of the first area in which the terminal is located has been updated, and the terminal determines to receive the updated first message. S804 further includes S804c: The access network device sends the updated first message to the terminal.

If the terminal receives, in S804a, the message indicating that the configuration information of the neighboring cell has been updated, and an identifier of an area included in the message is not the first identifier, that is, the message indicates that the area in which the configuration information has been updated is not the first area in which the terminal is located, the terminal determines not to further receive the message including the updated configuration information.

S805: The access network device 1 sends terminal-specific configuration information of the second cell to the terminal.

Correspondingly, the terminal receives the terminal-specific configuration information of the second cell from the access network device 1.

S806: The terminal determines, based on the first message and the terminal-specific configuration information of the second cell, complete configuration information used for handover to the second cell.

In an implementation, the access network device 1 may send the terminal-specific configuration information of each of the N second cells to the terminal.

The terminal may obtain cell-common configuration information of each of the N second cells based on the first message, and the terminal determines, based on the cell-common configuration information of each second cell and the terminal-specific configuration information of the terminal in each second cell, complete configuration information used by the terminal to switch to each second cell.

In another implementation, the access network device 1 may send the terminal-specific configuration information of the at least one of the N second cells to the terminal.

For example, the access network device 1 may determine at least one second cell to which the terminal may switch in the N second cells, and the access network device 1 sends the terminal-specific configuration information of each of the at least one second cell to the terminal. The terminal determines the complete configuration information of each of the at least one cell based on the cell-common configuration information of each of the at least one cell and the terminal-specific configuration information of each cell that are obtained from the first message.

It should be understood that, when the access network device 1 sends the terminal-specific configuration information of the plurality of second cells to the terminal, terminal-specific configuration information of different second cells may be carried in a same message, or may be carried in different messages. This is not limited in this application.

S807. The access network device 1 sends a handover indication message to the terminal, where the handover indication message indicates the terminal to switch to a target cell.

Correspondingly, the terminal receives the handover indication message from the access network device 1, and determines to switch to the target cell.

S808: The terminal switches to the target cell based on the configuration information of the target cell.

The target cell is a cell managed by the access network device 2. The terminal sends a random access signal to the access network device 2 on a random access resource of the target cell based on configuration information of the target cell, to initiate a random access process, access the target cell, and establish a communication connection to the access network device 2.

S809: The terminal receives system information of the target cell.

The terminal may receive the system information of the target cell from the access network device 2, and use the target cell as a serving cell for communication.

According to the embodiment shown in FIG. 8, the access network device may broadcast the configuration information of the N second cells obtained through information extraction, so that signaling overheads of the configuration information that is sent in the first cell and that is used for handover to the neighboring cell can be reduced, and resource utilization can be improved.

The foregoing describes in detail the methods provided in this application with reference to the accompanying drawings. The following accompanying drawings describe a communication apparatus and a communication device provided this application. To implement functions in the methods provided in this application, network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

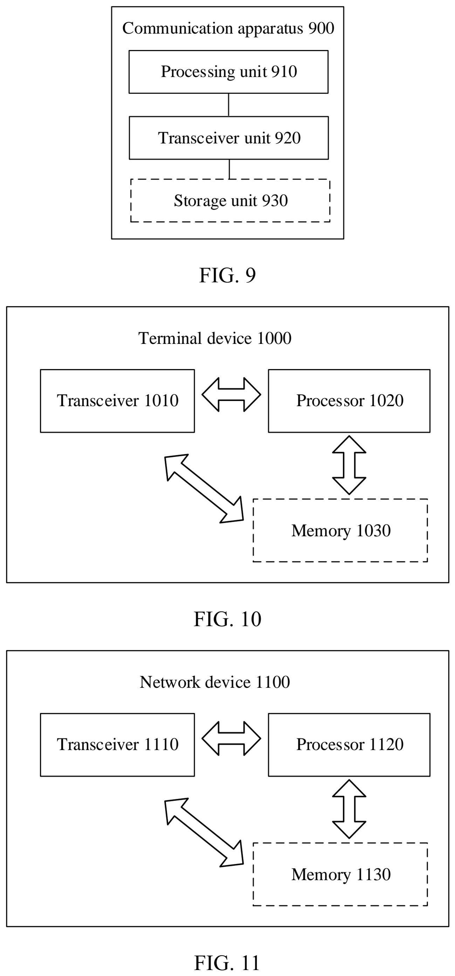

FIG. 9 is a block diagram of a communication apparatus according to this application. As shown in FIG. 9, the communication apparatus 900 may include a transceiver unit 920.

In a possible design, the communication apparatus 900 may correspond to the terminal in the foregoing method, a chip configured (or used) in the terminal, or another apparatus, module, circuit, unit, or the like that can implement the method of the terminal.

It should be understood that the communication apparatus 900 may include units configured to perform the methods performed by the terminal device in the methods shown in FIG. 6 to FIG. 8. In addition, the units in the communication apparatus 900 and the foregoing other operations and/or functions are separately intended to implement corresponding procedures of the methods shown in FIG. 6 to FIG. 8.

Optionally, the communication apparatus 900 may further include a processing unit 910. The processing unit 910 may be configured to process instructions or data, to implement a corresponding operation.

It should be further understood that when the communication apparatus 900 is a chip disposed (or used) in a terminal, the transceiver unit 920 in the communication apparatus 900 may be an input/output interface or circuit of the chip, and the processing unit 910 in the communication apparatus 900 may be a processor in the chip.

Optionally, the communication apparatus 900 may further include a storage unit 930. The storage unit 930 may be configured to store the instructions or the data. The processing unit 910 may execute the instructions or the data stored in the storage unit, to enable the communication apparatus to implement a corresponding operation.

It should be understood that the transceiver unit 920 in the communication apparatus 900 may be implemented by using a communication interface (for example, a transceiver or an input/output interface), for example, may correspond to the transceiver 1010 in the terminal device 1000 shown in FIG. 10. The processing unit 910 in the communication apparatus 900 may be implemented by using at least one processor, for example, may correspond to the processor 1020 in the terminal device 1000 shown in FIG. 10. Alternatively, the processing unit 910 in the communication apparatus 900 may be implemented through at least one logic circuit. The storage unit 930 in the communication apparatus 900 may correspond to the memory 1030 in the terminal device 1000 shown in FIG. 10.

It should be further understood that specific processes in which the units perform the foregoing corresponding steps are described in detail in the foregoing methods. For brevity, details are not described herein again.

In another possible design, the communication apparatus 900 may correspond to the access network device (for example, the first access network device or the second access network device) in the foregoing method, a chip configured (or used) in the access network device, or another apparatus, module, circuit, unit, or the like that can implement the method of the access network device.

It should be understood that the communication apparatus 900 may include units configured to perform the methods performed by the first access network device or the second access network device in the methods shown in FIG. 6 to FIG. 8. In addition, the units in the communication apparatus 900 and the foregoing other operations and/or functions are separately intended to implement corresponding procedures of the methods shown in FIG. 6 to FIG. 8.

Optionally, the communication apparatus 900 may further include a processing unit 910. The processing unit 910 may be configured to process instructions or data, to implement a corresponding operation.

It should be further understood that when the communication apparatus 900 is the chip configured (or used) in the access network device, the transceiver unit 920 in the communication apparatus 900 may be an input/output interface or circuit of the chip, and the processing unit 910 in the communication apparatus 900 may be a processor in the chip.

Optionally, the communication apparatus 900 may further include a storage unit 930. The storage unit 930 may be configured to store the instructions or the data. The processing unit 910 may execute the instructions or the data stored in the storage unit, to enable the communication apparatus to implement a corresponding operation.

It should be understood that when the communication apparatus 900 is an access network device, the transceiver unit 920 in the communication apparatus 900 may be implemented by using a communication interface (for example, a transceiver or an input/output interface), for example, may correspond to a transceiver 1110 in a network device 1100 shown in FIG. 11. The processing unit 1110 in the communication apparatus 1100 may be implemented by using at least one processor, for example, may correspond to the processor 1120 in the network device 1100 shown in FIG. 11. The processing unit 910 in the communication apparatus 900 may be implemented by using at least one logic circuit. The storage unit 930 in the communication apparatus 900 may correspond to a memory 1130 in the network device 1100 shown in FIG. 11.

It should be further understood that specific processes in which the units perform the foregoing corresponding steps are described in detail in the foregoing methods. For brevity, details are not described herein again.

FIG. 10 is a diagram of a structure of a terminal device 1000 according to this application. The terminal device 1000 may be used in the system shown in FIG. 1, to perform functions of the terminal device in the foregoing method. As shown in the figure, the terminal device 1000 includes a processor 1020 and a transceiver 1010. Optionally, the terminal device 1000 further includes a memory. The processor 1020, the transceiver 1010, and the memory may communicate with each other through an internal connection path, to transfer a control signal and/or a data signal. The memory is configured to store a computer program, and the processor 1020 is configured to execute the computer program in the memory 1030, to control the transceiver 1010 to send and receive a signal.

The processor 1020 may be configured to perform an action that is implemented inside the terminal device and that is described in the foregoing method, and the transceiver 1010 may be configured to perform an action that is of sending to or receiving from the network device by the terminal device and that is described in the foregoing method. For details, refer to the descriptions in the foregoing methods. Details are not described herein again.

Optionally, the terminal device 1000 may further include a power supply, configured to supply power to various components or circuits in the terminal device.

FIG. 11 is a diagram of a structure of a network device 1100 according to this application. The network device 1100 may be used in the system shown in FIG. 1, and perform functions of the network device (for example, the first network device or the second network device) in the foregoing method. As shown in the figure, the network device 1100 includes a processor 1120 and a transceiver 1110. Optionally, the network device 1100 further includes a memory. The processor 1120, the transceiver 1110, and the memory may communicate with each other through an internal connection path, to transfer a control signal and/or a data signal. The memory 1130 is configured to store a computer program, and the processor 1120 is configured to execute the computer program in the memory, to control the transceiver 1110 to send and receive a signal.

The processor 1120 may be configured to perform an action that is implemented inside the network device and that is described in the foregoing method, and the transceiver 1110 may be configured to perform an action that is of sending to or receiving from the terminal by the network device and that is described in the foregoing method. For details, refer to the descriptions in the foregoing methods. Details are not described herein again.

Optionally, the network device 1100 may further include a power supply, configured to supply power to various components or circuits in the network device.

In the terminal device shown in FIG. 10 and the network device shown in FIG. 11, the processor and the memory may be integrated into one processing apparatus, and the processor is configured to execute program code stored in the memory to implement the foregoing functions. During specific implementation, the memory may alternatively be integrated into the processor, or may be independent of the processor. The processor may correspond to the processing unit in FIG. 9. The transceiver may correspond to the transceiver unit in FIG. 9. The transceiver 1010 may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general purpose processor may be a microprocessor or any conventional processor or the like. The steps of the methods with reference to this application may be directly performed and completed by a hardware processor, or may be performed and completed by a combination of hardware in the processor and a software module.

In this application, the memory may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method in any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

According to the method provided in this application, this application further provides a computer program product. The computer program product includes computer program code. When the computer program code is executed by one or more processors, an apparatus including the processor is enabled to perform the methods shown in FIG. 6 to FIG. 8.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The foregoing computer instructions may be stored in a computer-readable storage medium, or may be transmitted from a computer-readable storage medium to another computer-readable storage medium. The computer-readable storage medium may be any usable medium accessible to a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the method provided in this application, this application further provides a computer-readable storage medium. The computer-readable storage medium stores program code. When the program code is run by one or more processors, an apparatus including the processor is enabled to perform the methods shown in FIG. 6 to FIG. 8.

According to the methods provided in this application, this application further provides a system, including the foregoing one or more terminal devices. The system may further include the foregoing one or more access network devices.

In several embodiments provided in this application, it should be understood that the disclosed system, apparatus, and method may be implemented in other manners. For example, the described apparatus is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

It may be understood that in embodiments of this application, the terminal device and/or the access network device may perform some or all steps in embodiments of this application. These steps or operations are merely examples. In embodiments of this application, other operations or variations of various operations may be further performed. In addition, the steps may be performed in different sequences presented in embodiments of this application, and not all operations in embodiments of this application may be performed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device, and the method comprises:
determining a first information set, wherein parameter information in the first information set is parameter information comprised in configuration information of each of a plurality of second cells, the configuration information is used by a terminal to switch, the first network device manages a first cell, and the second cell is a neighboring cell of the first cell; and
sending a first message in the first cell, wherein the first message comprises the first information set and a second information set of each second cell, and the second information set comprises parameter information other than the first information set in the configuration information of the second cell.

2. The method according to claim 1, wherein the first message further comprises a first identifier, the first identifier identifies a first area, and the first area comprises the plurality of second cells.

3. The method according to claim 2, wherein the method further comprises:
sending a second message in the first cell, wherein the second message comprises the first identifier, and the second message indicates that configuration information of a cell in the first area is updated.

4. The method according to claim 3, wherein the method further comprises:
sending a third message, wherein the third message comprises updated parameter information in the configuration information of the cell in the first area.

5. The method according to any one of claims 1 to 4, wherein the determining the first information set comprises:
receiving the configuration information of the plurality of second cells from at least one second network device; and
determining the first information set based on the configuration information of the plurality of second cells.

6. The method according to claim 5, wherein the receiving the configuration information of the plurality of second cells from the at least one second network device comprises:
receiving configuration information of at least one second cell from the second network device in a process of establishing a communication interface with the second network device.

7. The method according to any one of claims 1 to 4, wherein the method further comprises:
receiving the first information set from a second network device, wherein the second network device manages the plurality of second cells; and
receiving the second information set of each second cell from the second network device.

8. A communication method, wherein the method is applied to a terminal and comprises:
receiving a first message from a first network device, wherein the first message comprises a first information set, parameter information in the first information set is parameter information comprised in configuration information of each of a plurality of second cells, the configuration information is used by the terminal to switch, the first message further comprises a second information set of each second cell, the second information set comprises parameter information other than the first information set in the configuration information of the second cell, the second cell is a neighboring cell of the first cell, and the first cell is a serving cell of the terminal; and
determining the configuration information of the second cell based on the first information set and the second information set of the second cell.

9. The method according to claim 8, wherein the first message further comprises a first identifier, the first identifier identifies a first area, the first area comprises the plurality of second cells, and the terminal is located in the first area.

10. The method according to claim 9, wherein the method further comprises:
receiving a second message from the first network device, wherein the second message indicates that configuration information of a cell in the first area is updated.

11. The method according to claim 10, wherein the receiving the first message from the first network device comprises:
when the second message comprises the first identifier, receiving the first message from the first network device.

12. The method according to claim 10, wherein the method further comprises:
receiving a third message from the first network device, wherein the third message comprises updated parameter information in the configuration information of the cell in the first area.

13. The method according to any one of claims 8 to 12, wherein the receiving the first message from the first network device comprises:
when remaining service duration of the first cell is less than or equal to a threshold, receiving the first message from the first network device; or
when the terminal is located at an edge location in the first cell, receiving the first message from the first network device, wherein the edge location is indicated by the first network device.

14. A communication apparatus, comprising:
a processing unit, configured to determine a first information set, wherein parameter information in the first information set is parameter information comprised in configuration information of each of a plurality of second cells, the configuration information is used by a terminal to switch, a first network device manages a first cell, and the second cell is a neighboring cell of the first cell; and
a transceiver unit, configured to send a first message in the first cell, wherein the first message comprises the first information set and a second information set of each second cell, and the second information set comprises parameter information other than the first information set in the configuration information of the second cell.

15. The apparatus according to claim 14, wherein the first message further comprises a first identifier, the first identifier identifies a first area, and the first area comprises the plurality of second cells.

16. The apparatus according to claim 15, wherein the transceiver unit is further configured to send a second message in the first cell, wherein the second message comprises the first identifier, and the second message indicates that configuration information of a cell in the first area is updated.

17. The apparatus according to claim 16, wherein the transceiver unit is further configured to send a third message, wherein the third message comprises updated parameter information in the configuration information of the cell in the first area.

18. The apparatus according to any one of claims 14 to 17, wherein the transceiver unit is further configured to receive the configuration information of the plurality of second cells from at least one second network device; and
the processing unit is specifically configured to determine the first information set based on the configuration information of the plurality of second cells.

19. The apparatus according to claim 18, wherein the transceiver unit is specifically configured to receive configuration information of at least one second cell from the second network device in a process of establishing a communication interface with the second network device.

20. The apparatus according to any one of claims 14 to 17, wherein the transceiver unit is further configured to: receive the first information set from a second network device, wherein the second network device manages the plurality of second cells; and receive the second information set of each second cell from the second network device.

21. A communication apparatus, comprising:
a transceiver unit, configured to receive a first message from a first network device, wherein the first message comprises a first information set, parameter information in the first information set is parameter information comprised in configuration information of each of a plurality of second cells, the configuration information is used by a terminal to switch, the first message further comprises a second information set of each second cell, the second information set comprises parameter information other than the first information set in the configuration information of the second cell, the second cell is a neighboring cell of the first cell, and the first cell is a serving cell of the terminal; and
a processing unit, configured to determine the configuration information of the second cell based on the first information set and the second information set of the second cell.

22. The apparatus according to claim 21, wherein the first message further comprises a first identifier, the first identifier identifies a first area, the first area comprises the plurality of second cells, and the terminal is located in the first area.

23. The apparatus according to claim 22, wherein the transceiver unit is further configured to receive a second message from the first network device, and the second message indicates that configuration information of a cell in the first area is updated.

24. The apparatus according to claim 23, wherein the transceiver unit is specifically configured to: when the second message comprises the first identifier, receive the first message from the first network device.

25. The apparatus according to claim 23, wherein the transceiver unit is further configured to receive a third message from the first network device, wherein the third message comprises updated parameter information in the configuration information of the cell in the first area.

26. The apparatus according to any one of claims 21 to 25, wherein the transceiver unit is specifically configured to:
when remaining service duration of the first cell is less than or equal to a threshold, receive the first message from the first network device; or
when the terminal is located at an edge location in the first cell, receive the first message from the first network device, wherein the edge location is indicated by the first network device.

27. A communication apparatus, comprising a processor and a communication interface, wherein the processor performs the method according to any one of claims 1 to 7 or the method according to any one of claims 8 to 13 through the communication interface.

28. A computer-readable storage medium, storing instructions, wherein when the instructions are run on a computer, the computer is enabled to perform the method according to any one of claims 1 to 7, or perform the method according to any one of claims 8 to 13.

29. A computer-readable storage medium, wherein the storage medium stores a computer program or instructions, and when the computer program or the instructions are executed by a communication apparatus, the method according to any one of claims 1 to 13 is implemented.

30. A communication system, comprising:
a communication apparatus configured to perform the method according to any one of claims 1 to 7 and a communication apparatus configured to perform the method according to any one of claims 8 to 13.
